# EUROPEAN PATENT SPECIFICATION

(11) **EP 4 503 677 B1**
(45) Date of publication and mention of the grant of the patent: **02.12.2026**
(21) Application number: 24192306.9
(22) Date of filing: 01.08.2024
(51) Int. Cl.: H04W 4/70, G01F 15/063, H04W 88/04, H04W 88/06

(54) **GAS METER AND METHOD OF TRANSMITTING MEASUREMENTS**
GASZÄHLER UND VERFAHREN ZUR ÜBERTRAGUNG VON MESSUNGEN
COMPTEUR DE GAZ ET PROCÉDÉ DE TRANSMISSION DE MESURES

(30) Priority: 04.08.2023 IT 202300016686
(43) Date of publication of application: 05.02.2025
(73) Proprietor: Italgas Reti S.p.A., 10153 Torino (TO) (IT)
(72) Inventor: Fujani, Giorgio Emilio, 10153 Torino (TO) (IT); Martini, Marco, 10153 Torino (TO) (IT); Cerasoli, Talisa, 10153 Torino (TO) (IT); Sattanino, Massimo, 10153 Torino (TO) (IT)
(74) Representative: Bird & Bird Società tra Avvocati S.r.l.

(56) References cited:
- EP-A1- 3 848 679
- EP-A1- 4 036 527
- US-A1- 2016 353 334
- US-A1- 2017 142 653
- US-A1- 2018 332 103

## Description

### Background of the present invention

### Field of the present invention

The present invention relates to the field of gas meters. In greater detail, the present invention relates to gas meters provided with wireless data communication units.

Likewise, the present invention relates to a transmission method for measurements indicative of gas deliveries, generated by gas meters provided with wireless data communication units.

### Background of the correlated art

It is known that a gas meter is a device installed at a site (a house, apartment, commercial building, industrial building, etc.) that benefits from the delivery of combustible gas by a gas supplier, having the function of producing a measurement for the gas actually delivered to that location.

There are various types of gas meters, according to the technology used to measure the gas delivery. However, the most significant distinction is between a dynamic measuring principle and a static measuring principle.

The measurements made by the gas meter must be reported periodically to allow the gas supplier to charge the beneficiary of the gas supply contract a fee dependent on the actual amount of delivered gas.

For this reason, it is common to provide gas meters with a data transmission module capable of automatically (e.g., periodically) sending data indicative of measurements taken locally by the gas meters to a remote acquisition system.

Also, in the case of data transmission, there are various types of data transmission modules based on different communication technologies.

Among wired communication technologies, the most popular is PLC (powerline communication) technology, which uses the physical medium of electrical power networks.

Among wireless communication technologies, the most popular comprise WAN communication technologies, LAN communication technologies, and proximity communication technologies.

A smart meter such as the one described in patent document No. US2018332103 is known, provided with a processor module coupled to a measurement module, a storage module, and a short-range communication module, and possibly a long-range communication module.

If the smart meter is not the smart meter elected as the portal, it communicates the measurements to the operator or the next nearest smart meter using the close-range communication module to forward the measurements to the portal or the next smart meter nearest to the portal.

If the smart meter is the smart meter elected as the portal, it forwards the measurements to the operator using the remote communication module to transmit the measurements to an access network infrastructure.

The processor module of this smart meter receives readings or measurements from other smart meters by means of the close-range communication module and forwards them to the public utility operator, and is also able to collect and combine, or aggregate, the measurements with measurements received from other meters and then send them to the utility operator. Therefore, it is apparent how such a processor module cannot evaluate the efficiency of communication between the portal meter and the infrastructure and the nearest meters. This smart meter, by means of the processor module, does not allow the evaluation of measurement communication efficiency or the activation of alternative measurement communication if the main communication is compromised.

Also described in the patent document is a method of identifying and choosing a portal between the included meters by means of a decision tree algorithm, or calculating a cost function, as a function of the ability to communicate with an access node, the signal quality, the power supply type (battery or wired), the number of meters with which the possible portal communicates, etc.

Therefore, it is apparent that the technical problem solved by this patent document is to reduce the number of direct connections to access an infrastructure sending the individual measurements of each meter by means of the election of a portal meter connected with a plurality of connectors that are sufficiently close together and that communicate with each other by means of communication links and forming a short-range network.

A second patent document No. EP403627 is also known relating to a meter configured to monitor the usage of a consumable supplied by a service provider, and to send messages about the usage of the consumable to a central control system, intelligently switching from a short-range to a long-range communication mode.

This meter is provided with a metrology core, configured to measure the usage of consumable material (e.g., electricity, gas, or water), and a controller operationally coupled to the metrology core, configured to check the performance of the local mesh network relative to one or more predetermined performance criteria. If the performance of the mesh local area network meets one or more of the predetermined performance criteria, the controller communicates an initial set of information to the central control system using a short-range communication mode by means of the mesh local area network. If the performance of the local mesh network does not meet one or more predetermined performance criteria, the controller is configured to communicate a second set of information to the central control system using a long-range communication mode. The patent document lists a communication technology chosen between NB-IoT, LTE, CAT-M1, LoRaWAN, SigFox, or 5G as the long-range communication mode, alternative to short-range.

It is apparent that, with such a meter, it is possible to evaluate and activate a short-range communication or alternatively a long-range communication as a function of predetermined performance criteria, but it is not possible to make multiple attempts in sequence by activating a plurality of communication modes in sequence, and consequently by activating a plurality of cascading communication technologies to ensure an increase and high reliability of measurement data transmission, even in situations of poor signal coverage.

Further, patent document No. EP3848679 is known, which describes a device for measuring a fluid (gas or liquid), equipped with an internal sensor and two wireless communication modules operating on different frequencies. A control unit manages the use of the modules, activating them individually under normal conditions or both simultaneously only for the transmission and reception of high-priority data. However, this patent does not disclose two distinct pluralities of communication units, sequential transmission attempts within each plurality, or a backup communication mode based on meter-to-meter communication.

Finally, patent document No. US2017142653 is known, which describes communication devices and methods for communicating data using communication devices, and also communication devices which function as relay nodes and methods for communicating by means of a relay node, free from any components dedicated to verifying proper communication between communication devices.

### Summary of the present invention

The Applicant has found that known solutions suffer from drawbacks which limit measurement data transmission performance and reliability.

The use of gas meters which exploit wired communication technologies is expensive in terms of installation, requiring the installation of dedicated wiring or connection to a further pre-existing wiring.

Gas meters which exploit WAN communication technologies can be affected by problems deriving from poor signal coverage or connection instability.

LAN or proximity communication technologies cannot be used for gas meters located in positions distant from the remote acquisition system.

A further problem with gas meters configured to communicate data by means of wireless communication technologies relates to electrical power consumption. Indeed, wireless communication may involve excessive consumption of electrical power.

In view of the above, the Applicant has devised a solution to remedy this and further inconveniences.

One or more aspects of the present invention are set forth in the independent claims, with advantageous features of the same invention being set forth in the dependent claims, the wording of which is incorporated herein verbatim by reference (with any advantageous feature being set forth with reference to a specific aspect of the present invention which applies mutatis mutandis to any other aspect of the same).

The solutions according to embodiments of the present invention involve equipping each gas meter with at least two communication units, each configured to communicate by means of a different type of wireless communication link. Furthermore, the solutions according to embodiments of the present invention involve equipping each gas meter with at least one communication unit configured to communicate with a central acquisition system using a wireless communication technology which exploits a first infrastructure network-based communication mode and at least one communication unit configured to communicate with the central acquisition system using a wireless communication technology which exploits a second P2P communication mode between neighboring gas meters.

In particular, the present invention relates to a gas meter comprising a measuring unit to generate measurements indicating gas deliveries.

Said measurement unit is operationally connected to a control unit, which may be comprised in the meter, to send the measurements generated, in particular to the control unit.

The gas meter further comprises at least one first wireless communication unit configured to communicate with a remote acquisition system by exploiting a first type of wireless communication link and to send the generated measurements, in particular previously received by the control unit, typically in the form of measurement data.

The gas meter further comprises at least a second wireless communication unit configured to communicate with a remote acquisition system exploiting a second type of wireless communication link, different from the first type of wireless communication link and to send the generated measurements, in particular previously received from the control unit, typically in the form of measurement data.

According to an embodiment of the present invention, said first type of wireless link and second type of wireless link respectively involve a wireless communication link which exploits licensed frequency bands and a wireless communication link which exploits unlicensed frequency bands.

According to an embodiment of the present invention, the gas meter further comprises a control unit.

According to an embodiment of the present invention, said first type of wireless communication link comprises a first type of wireless communication link between the gas meter and a communication network-transmitting and receiving station in communication with the remote acquisition system.

According to an embodiment of the present invention, said second type of wireless communication link comprises a second type of wireless communication link between the gas meter and one selected from a group of other gas meters.

According to an embodiment of the present invention, the control unit is configured to send said measurements by performing the following sequence of operations:
- control the first communication unit to send said measurements to the remote acquisition system by exploiting said first type of wireless communication link;
- if said first type of wireless communication link is not available, control the second communication plurality to send said measurements to the remote acquisition system exploiting at least said second type of wireless communication link.

Compared to the known solutions, measurements are thus advantageously sent more reliably, because a backup system is provided (based on said second type of wireless communication link) in case the first type of wireless communication link is not available or does not work correctly.

According to an embodiment of the present invention, said first type of wireless link and second type of wireless link comprise a wireless communication link which exploits licensed frequency bands and a wireless communication link which exploits unlicensed frequency bands.

According to an embodiment of the present invention, said wireless communication link which exploits licensed frequency bands comprises at least one between:
- an NB-IoT type communication link (in particular, according to the ETSI TS 136 331 specification);
- a GPRS communication link (in particular, according to the ETSI EN 301 344 specification);

- a UMTS communication link (in particular, according to the ETSI TS 129 002 specification);
- a GSM communication link (in particular, according to the ETSI EN 301 511 specification);
- an LTE communication link (in particular, according to the ETSI TS 136 101 specification);
- a 5G communication link (in particular, according to the ETSI TS 123 501 specification);
- a 6G communication link;
obviously, since we are dealing here with communications between a gas meter and a remote acquisition system for the transfer of measurements, in particular measurement data, the link must exploit link type characteristics that are suitable for such transfer.

According to an embodiment of the present invention, said wireless communication link which exploits unlicensed frequency bands comprises at least one between:
- a wireless MBus type communication link, e.g., at 169 MHz (in particular, according to the ETSI TS 103 357 specification);
- a LoRa type communication link (in particular, according to the ETSI TR 103 526 specification), e.g., a LoRaWAN link (in particular, according to the ETSI TR 103 526 specification) and/or a LoRaP2P link;
- a Bluetooth type communication link (in particular, according to the ETSI EN 300 328 specification);
- a BLE type communication link (in particular, according to the ETSI EN 300 328 specification);
- a 6LoWPAN type communication link (in particular, according to the ETSI EN 300 328 specification);
- a ZigBee type communication link (in particular, according to the ETSI EN 300 328 specification);
obviously, since we are dealing here with communications between a gas meter and a remote acquisition system for the transfer of measurements, in particular measurement data, the link must exploit link type characteristics that are suitable for such transfer.

According to an embodiment of the present invention, said first type of wireless link is a link based on a network infrastructure.

According to an embodiment of the present invention, said second type of wireless link is a P2P type of link.

According to an embodiment of the present invention, said control unit is configured to perform the following sequence of operations:
- control said second communication unit to receive from a further gas meter of said group of other gas meters measurements generated by said further gas meter exploiting said second wireless communication type;
- control said first communication unit to send to the remote acquisition system said received measurements generated by said further gas meter exploiting said first type of wireless communication link.

According to an embodiment of the present invention, said first type of wireless communication link comprises one or more wireless communication links between:
- an NB-IoT type communication link between a first gas meter communication unit and a station in an NB-IoT network;
- a LoRaWAN type communication link between a first gas meter communication unit and a station in a LoRaWAN network.

According to an embodiment of the present invention, said LoRaWAN type communication link is done by means of a LoRaRelay node, in particular, a communication unit of one of the group's other gas meters.

According to an embodiment of the present invention, the gas meter comprises two or more first communication units each configured to communicate with the remote acquisition system exploiting a different wireless communication link.

According to an embodiment of the present invention, said control unit is configured to control in sequence said first communication units to send said measurements to the remote acquisition system exploiting the respective wireless communication links.

According to an embodiment of the present invention, said second type of wireless communication link comprises one or more wireless communication links, among:
- a BLE communication link between a second communication unit of the gas meter and a second communication unit of one of the group's other gas meters;
- a LoRaP2P communication link between a second communication unit of the gas meter and a second communication unit of one of the group's other gas meters.
- a ZigBee communication link between a second communication unit of the gas meter and a second communication unit of one of the group's other gas meters.

According to an embodiment of the present invention, the gas meter comprises two or more second communication units each configured to communicate with the remote acquisition system exploiting a different wireless communication link, said control unit being configured to control in sequence said second communication units to send to the remote acquisition system said measurements by exploiting respective wireless communication links.

According to an embodiment of the present invention, the control unit is configured to generate a proximity table which lists said group of other gas meters.

According to an embodiment of the present invention, said group of other gas meters comprises other gas meters sufficiently close to said gas meter to guarantee a potential second type of wireless communication link.

Another aspect of the present invention relates to a system for acquiring measurements indicative of gas deliveries at a plurality of sites.

Said system comprises:
- a gas meter installed at each of said sites, said gas meter being configured to generate measurements indicative of gas deliveries at the site where it is installed;
- a remote acquisition system configured to receive said measurements from the gas meters.

### Brief description of the drawings

These and other features and advantages of the present invention will be more apparent from the reading of the following detailed description of illustrative and non-limiting embodiments of the invention. For better intelligibility, the following description should be read with reference to the accompanying drawings, in which:
**Figure 1A** shows a system for managing measurements of gas delivered to a plurality of sites according to an embodiment of the present invention;
**Figure 1B** is a version of the system of **Figure 1A** in which a first communication mode between a gas meter communication unit and a central acquisition system according to an embodiment of the present invention is shown;
**Figure 1C** is a version of the system of **Figure 1A** in which a second communication mode between a gas meter communication unit and a central acquisition system according to an embodiment of the present invention is shown;
**Figure 2** is a functional simplified block diagram of a gas according to an embodiment of the present invention;
**Figure 3** is a flowchart which describes operations performed by a gas meter control unit of **Figure 2** to transmit measurement data to a central acquisition system according to an embodiment of the present invention, and
**Figures 4A** and **4B** show a flowchart which describes in greater detail the operations performed by a gas meter control unit in **Figure 2** to transmit measurement data to a central acquisition system according to an embodiment of the present invention.

### Detailed description of non-limiting example embodiments of the present invention

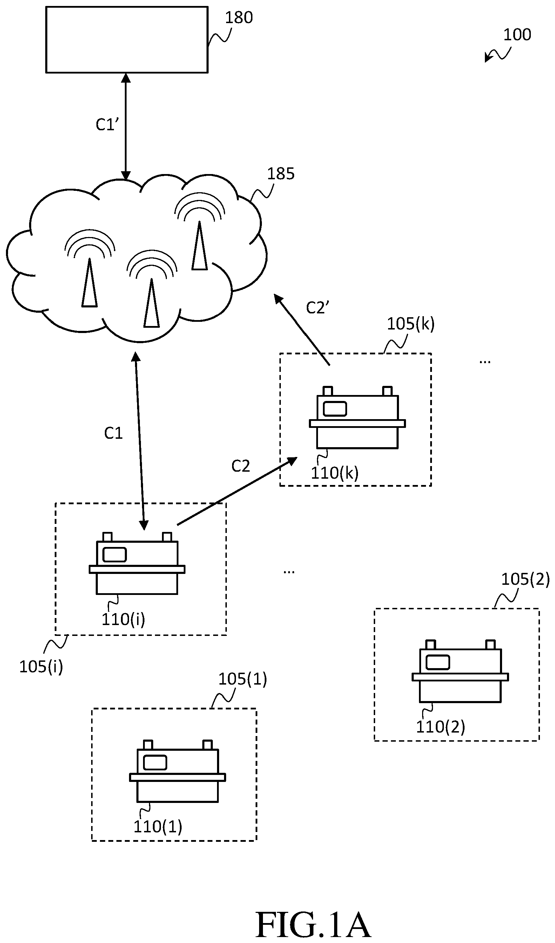

With reference to the drawings, **Figure 1A** shows a system **100** for managing measurements of gas delivered by a gas supplier to a plurality of sites **105(i)** (i = **1, 2,** ...), such as houses, apartments, villas, businesses, industrial plants, warehouses, according to an embodiment of the present invention.

According to an embodiment of the present invention, a respective gas meter **110(i)** (i = 1, 2, ...) configured to measure the amount of gas delivered to the site **105(i)** is installed at each site **105(i).**

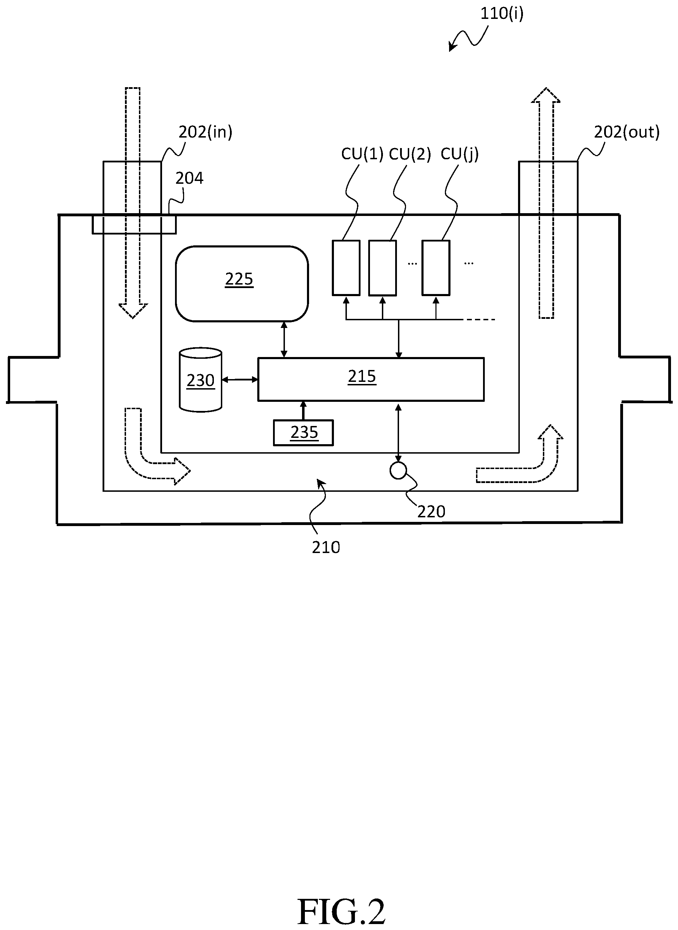

**Figure 2** shows an example of a gas meter **110(i)** according to an embodiment of the present invention in terms of simplified functional blocks.

According to an embodiment of the present invention, the gas meter **110(i)** comprises an inlet pipe **202(in)** to receive the gas from a gas supply network (not shown).

According to an embodiment, the gas meter **110(i)** comprises a measuring chamber (or pipe) **210** in fluid communication with the inlet pipe **202(in)** and with an outlet pipe **202(out),** consequently defining a passage for gas from the inlet pipe **202(in)** to the outlet pipe **202(out).** The outlet pipe **202(out)** is connected to a gas distribution network of the site **105(i)** (not shown) for the delivery of gas received at one or more gas use points within the site **105(i).**

According to an embodiment of the present invention, the gas meter **110(i)** is a "smart" gas meter comprising a control unit **215,** e.g., comprising one or more electronic processors, configured to manage the operations performed by the gas meter **110(i).**

According to an embodiment of the present invention, a sensor **220** for measuring the flow of gas which flows from the inlet pipe **202(in)** to the outlet pipe **202(out)** is coupled to the measuring chamber **210** (e.g., placed inside the measuring chamber **210).** The sensor **220** is configured to generate detection data R indicative of measurements of one or more physical quantities related/influenced/determined by the gas flow which crosses the measurement chamber **210.**

According to an embodiment of the present invention, the sensor **220** is a sensor based on static technology configured to measure family II gases (natural gas), with natural gas/hydrogen mixtures, and/or with family III gases (liquid propane gas). The sensor **220** and the control unit **215** are connected to exchange data and messages, such as commands (from the control unit **215** to the sensor **220)** for controlling the sensor **220** by the control unit **215,** and detection data R (from sensor **220** to the control unit **215)** generated by the sensor **220.** Without going into details known to the people skilled in the art, the control unit **215** is configured to process the detection data R received from the sensor **220** to calculate corresponding measurement data M indicative of an actual amount of gas delivered to the site **105(i)** by means of the gas meter **110(i).**

However, it is emphasized that the concepts of the present invention are directly applicable to meters provided with sensors made with different technologies, such as diaphragm, rotary piston, turbine, and infrared sensors.

According to an embodiment of the present invention, a valve **204,** e.g., a solenoid valve, is advantageously provided at the inlet pipe **202(in)** and operable by the control unit **215** to selectively enable/disable the entry of gas into the measuring chamber **210** - and, consequently, to selectively enable/disable the delivery of gas received at the points of gas use within the site **105(i).**

According to an embodiment of the present invention, the gas meter **110(i)** further comprises a user interface **225** controlled by the control unit **215** and comprising, for example, a display for displaying information (such as measurement data M calculated by the control unit **215),** buttons, and/or interfaces for wired connections (such as RS232, USB, and optical ports) to allow a user or operator to interact with the gas meter **110(i).**

According to an embodiment of the present invention, the gas meter **110(i)** comprises a storage unit **230** configured to store data, such as measurement data M. For example, the memory unit **230** can be coupled to the control unit **215** or can be directly part of the latter.

According to an embodiment of the present invention, the gas meter **110(i)** comprises a plurality of communication units **CU(j)** (j = 1, 2, ...) controlled by the control unit **215** to transmit measurement data M to the gas supplier, as will be described in detail later in the description.

According to an embodiment of the present invention, the gas meter **110(i)** comprises a power supply unit **235,** e.g., comprising one or more batteries, to provide electrical power to the electronic components of the gas meter **110(i).** For example, the power supply unit **235** may comprise a communication battery to power the communication units **CU(j),** and a metrology battery to power the gas meter elements **110(i)** dedicated to generating and managing measurement data M.

Considering **Figure 1A** in combination with **Figure 2****,** according to an embodiment of the present invention, the gas meters **110(i)** are configured to transmit the measurement data M to a central acquisition system **180** (which allows the determination of consumption by the user) by means of communication units **CU(j).**

According to an embodiment of the present invention, each of the communication units **CU(j)** is configured to communicate with the central acquisition system **180** by means of one of the following two communication modes *G1,* G2 which will be explained below.

According to an embodiment of the present invention, a primary communication mode *G1* provides that a communication unit **CU(j)** of the generic gas meter **110(i)** communicates with the central acquisition system **180** by exploiting a link comprising:
- a wireless communication channel **C1** between the gas meter **110(i)** and a infrstructured communication network-transmitting and receiving station**185;**
- a wireless communication channel **C1'** between a communication network-transmitting and receiving station **185** and the central acquisition system **180.**

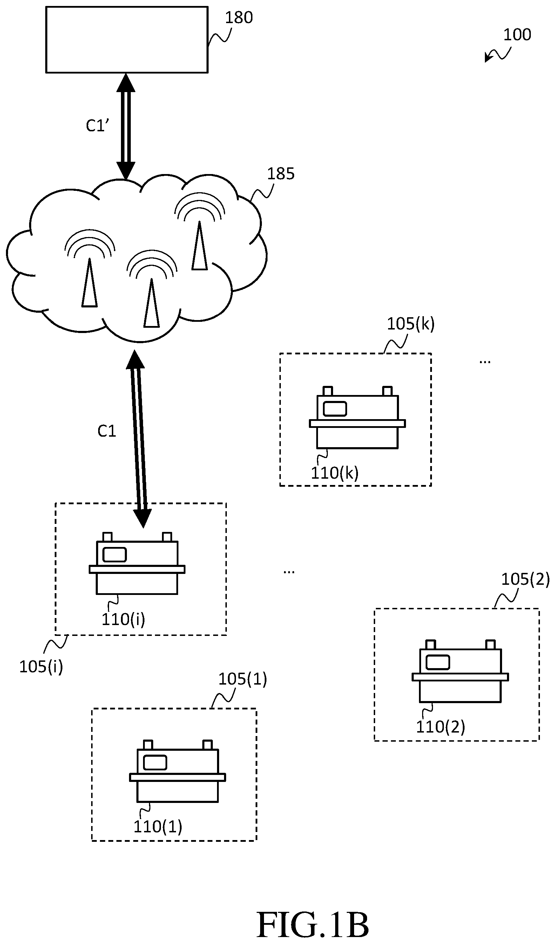

This primary communication mode *G1* is highlighted in **Figure 1B****.**

According to an embodiment of the present invention, a secondary communication mode G2 provides that a communication unit **CU(j)** of the gas meter **110(i)** communicates with the central acquisition system **180** exploiting a link comprising:
- a wireless communication channel **C2** (e.g., P2P type) between the gas meter **110(i)** and another gas meter **110(k)** (k ≠ i) near the first one;
- a wireless communication channel **C2'** between the gas meter **110(k)** and a communication network-transmitting and receiving station **185;**
- a wireless communication channel **C1'** between a communication network-transmitting and receiving station **185** and the central acquisition system **180.**

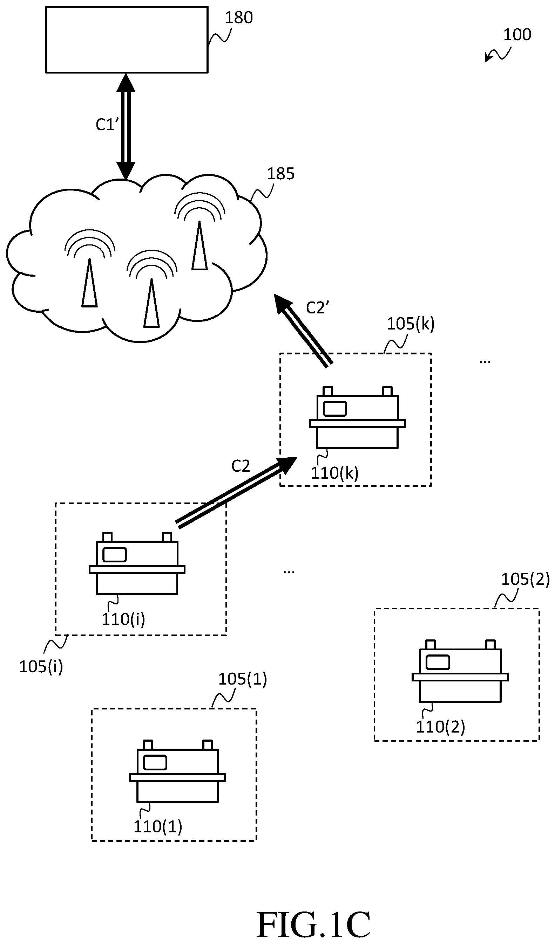

The secondary communication mode G2 is highlighted in **Figure 1C****.**

According to an embodiment of the present invention, each gas meter **110(i)** comprises at least one communication unit **CU(j)** configured to communicate with the central acquisition system **180** using a wireless communication technology which exploits the primary communication *G1* and a communication unit **CU(j)** configured to communicate with the central acquisition system **180** using a wireless communication technology which exploits the secondary communication mode *G2.*

According to an embodiment of the present invention, each communication unit **CU(j)** is configured to communicate with the central acquisition system **180** using a wireless communication technology chosen from:
- WAN (Wide Area Network) technologies based on licensed frequency bands, such as GPRS technology (in particular, according to the ETSI EN 301 344 specification), UMTS technology (in particular, according to the ETSI TS 129 002 specification), GSM technology (in particular, according to the ETSI EN 301 511 specification), LTE technology (in particular, according to the ETSI TS 136 101), 5G technology (in particular, according to the ETSI TS 123 501 specification), 6G technology, ECGSM IoT technology (extended coverage GSM for the Internet of things), LTE-M (LTE for machine-to-machine communication) and NBIoT, narrowband Internet of Things (in particular, according to the ETSI TS 136 331 specification)
- WAN or LAN (Local Area Network) or proximity technologies based on unlicensed frequency bands, such as wireless MBus (Meter Bus) technology, e.g. at 169 MHz (in particular, according to the ETSI TS 103 357), LoRa technology (in particular, according to the ETSI TR 103 526) (wide range expanded spectrum frequency modulation) (e.g., LoRaWAN (in particular, according to the ETSI TR 103 526) and/or LoRaP2P), Bluetooth technology (ETSI EN 300 328), BLE technology (in particular, according to the ETSI EN 300 328), 6LoWPAN technology (in particular, according to the ETSI EN 300 328) and ZigBee technology (in particular, according to the ETSI EN 300 328).

Licensed band communication technologies have been designed and deployed in the territory for the uses and needs of national mobile operators, and therefore are not fully adapted to the needs of gas distributors. Indeed, although these networks have nationwide coverage, there are still residual areas with little or insufficient coverage, and mobile operators do not provide the flexibility for these to offer the extension of coverage and service that gas distributors need instead.

On the other hand, unlicensed band communication technologies can offer the flexibility to extend service to all areas of the territory but with extremely expensive costs and infrastructure work.

According to an embodiment of the present invention, each gas meter **110(i)** comprises at least one communication unit **CU(j)** configured to communicate using wireless communication technology based on licensed frequency bands and at least one communication unit **CU(j)** configured to communicate using wireless communication technology based on unlicensed frequency bands.

In this manner, the gas meter **110(i)** can advantageously communicate using both licensed and unlicensed frequency bands.

According to an embodiment of the present invention, the technologies exploited by the **CU(j)** communication units for the primary *G1* communication mode comprise at least one between NBIoT and LoRaWAN technologies.

According to an embodiment of the present invention, the technologies exploited by the **CU(j)** communication units for the secondary communication mode *G2* comprise at least one between Bluetooth Low Energy (BLE) and LoRa Peer-to-Peer (LoRaP2P) technologies.

According to an embodiment of the present invention, the gas meter **110(i)** may comprise a communication unit **CU(j)** configured for transmissions according to the NBIoT standard conforming to 3GPP Release 13 / LTE Cat NB1 (EU) and 3GPP Release 14 / LTE Cat NB2 (EU) as amended. According to an exemplary embodiment of the present invention, the communication unit **CU(j)** comprises an NBIoT modem (provided with a SIM-on-Chip or an eSIM) which operates on one or more of the frequency bands, e.g., B3, B5, B8, B20, B28, B32, and which, for example, guarantees a total isotropic sensitivity TIS ≤ -110 dBm and a total radiant power TRP ≥ 18.5 dBm. According to an advantageous embodiment of the present invention, the communication can support both IPv4 and IPv6.

As the gas meter **110(i)** uses a communication unit **CU(j)** configured for transmissions according to the NBIoT standard, the communication channels **C1** and **C1'** are NBIoT communication channels, and the communication network **185** is an NBIoT communication network comprising transmitting and receiving stations compatible with NBIoT standard. Given the characteristics of NBIoT technology, the distances which can be covered by each of the communication channels **C1, C1'** can range from about 1 km (in an urban environment) to about 10 km (in a rural environment).

According to an embodiment of the present invention, the gas meter **110(i)** may comprise (either in addition to or instead of the communication unit **CU(j)** configured for transmissions according to the NBIoT standard) a communication unit **CU(j)** configured for transmissions according to LoRaWAN standard. According to an exemplary embodiment of the present invention, the communication unit **CU(j)** comprises a LoRaWAN modem which operates in unlicensed spectrum bands (e.g., 433 MHz, 868 MHz, 915 MHz), it guarantees total isotropic sensitivity TIS ≤ -125 dBm and total radiant power TRP ≥ 14dBm, has a data rate variable between 0.3 and 10 kbps, has a native security layer, and has high reachability levels (> 95%). According to an embodiment of the present invention, the communication unit **CU(j)** is, for example, configured as follows:
- explicit transmission (payload length, coding rate defined within the plot);
- predetermined spreading factor to limit Time-on-Air to no more than one second;
- defined application payload and length in bytes equal to: APDU of CF48 (but still definable/parametrizable);
- type B device;
- pre-assigned security parameters (NwkSKey, AppSKey) and unique identifier (DevAddr) (Activation by Personalization).

In this manner, it is advantageously possible to calculate the Time-on-Air in advance, and having fixed the communication frequency, the associated power consumption can be sized and evaluated.

As the gas meter **110(i)** uses a communication unit **CU(j)** configured for transmissions according to the LoRaWAN standard, communication channels **C1** and **C1'** are LoRaWAN communication channels and communication network **185** is a LoRaWAN communication network comprising transmitting and receiving stations compatible with the LoRaWAN standard. Given the characteristics of LoRaWAN technology, the distances that can be covered by communication channels **C1, C1'** can range from about 3-5 km (in an urban environment) to about 10 km (in a rural environment).

According to an embodiment of the present invention, the gas meter **110(i)** can comprise a communication unit **CU(j)** configured for BLE transmissions. According to an example of an embodiment of the present invention, the communication unit **CU(j)** comprises a communication module complying with the Bluetooth 5.1 standard.

As the gas meter **110(i)** uses a communication unit **CU(j)** configured for BLE transmissions, the communication channel C2 is a BLE communication channel, and the communication channels **C2'** and **C1'** are LoRaWAN or NBIoT communication channels. Given the characteristics of BLE technology, the distance that can be covered by the communication channel **C2** is about 20-25 m.

According to an embodiment of the present invention, the gas meter **110(i)** may comprise (in addition to, or instead of the communication unit **CU(j)** configured for BLE transmissions) a communication unit **CU(j)** configured for LoRaP2P transmissions. According to an example of an embodiment of the present invention, the communication unit **CU(j)** comprises a communication module complying with the LoRaP2P standard.

As the gas meter **110(i)** uses a communication unit **CU(j)** configured for LoRaP2P transmissions, communication channel **C2** is a LoRaP2P communication channel and communication channels **C2'** and **C1'** are LoRaWAN or NBIoT communication channels. Given the characteristics of LoRaP2P technology, the distance which can be covered by the communication channel **C2** varies from about 100 m to about one km, according to the surrounding environmental characteristics.

According to an embodiment of the present invention, the control unit **215** is configured to periodically generate a proximity table *PT* which lists the nearby gas meters **110(i)** (if any) located within the BLE and/or LoRaP2P communication radius which can be selected as recipients of BLE and/or LoRaP2P transmissions by the communication units **CU(j)** capable of communicating using these technologies. For example, the proximity table *PT* can be stored in the memory unit **230** of the gas meter **110(i).** According to an embodiment of the present invention, the proximity table *PT* is periodically generated during a search time window *FR* having a time, duration, and periodicity which are set to be the same for all gas meters **110(i).**

According to an embodiment of the present invention, the control unit **215** is configured to enable transmissions by means of the communication channel **C2** only within a periodic transmission time window *FT,* which is the same for all gas meters **110(i).** In this manner, the substantially high power consumption, typical of BLE or LoRaP2P technologies, is still within an acceptable threshold, for example, to guarantee a battery life **235** of 15 years.

According to a further embodiment of the present invention, two different transmission time windows *FT* may be provided, one for BLE transmissions and one for LoRaP2P transmissions.

According to an embodiment of the present invention, to increase security and ensure confidentiality of data transmitted by means of BLE, **CU(j)** the communication units arranged for such communication can, for example, be advantageously configured to implement a Just Work pairing of the bonding type.

As can be seen from the above, a substantial difference between the communication channel (BLE or LoRaP2P) **C2** and the communication channels (NBIoT and LoRaWAN) **C1, C1', C2'** concerns the distances which can be covered (with the communication channel **C2** having a much smaller radius). Another substantial difference concerns the time frame within which communications can be completed. While communications involving only the communication channels **C1, C1', C2'** are synchronous, communications involving the communication channel **C2** are of asynchronous type because the transmission on the communication channel **C2** is limited exclusively to a periodic transmission time frame *FT.*

According to an embodiment of the present invention, a method of transmitting to the central acquisition system **180** measurements indicative of gas deliveries generated by the gas meter **110(i)** at a plurality of sites **105(i)** is described, comprising the steps of:
a) selecting and activating by the control unit **215** a first communication unit **CU(1)** the first plurality of communication units **CU(1); CU(2);...; (CU(j)** to establish a connection with the communication network-transmitting and receiving station **185;** by means of the wireless communication channel **C1** of the primary communication mode *G1;*
b) if the connection was successful, transmitting measurement data to the central acquisition system **180** by means of the communication channel **C1'** of the primary communication mode *G1;*
c) acquiring by the central acquisition system **180** measurements indicative of gas deliveries;
d) if the connection was not successful, reiterating (from **2** to **j)** steps from **a)** to b) for each communication unit **CU(2) to CU(j)** of the first plurality of communication units **CU(1); CU(2); ...; (CU(j));**
e) if during the reiteration **(j)** the connection was not successful, selecting and activating by the control unit **215** a first communication unit (CU(1)) of the second plurality of communication units **(CU(1); CU(2);...; (CU(j))** to establish a connection with a gas meter **110(k)** with k=i by means of the communication channel **C2** of the secondary communication mode ***G2*;**
f) if the connection was not successful, reiterating (from **2** to **j)** step e) for each communication unit **(CU(2)** to **CU(j))** of the second plurality of communication units **CU(1); CU(2); ...; (CU(j));**
g) if the connection was successful, connecting and checking by the communication control unit **215** by means of the communication channel **C2'** the secondary communication mode ***G2*,** between the gas meter **110(k)** and the wireless communication network **185;**
h) if the check by the control unit **215** is negative, reiterating (from **2** to **j)** step g) for each communication unit (from **CU(2) to CU(j))** of the second plurality of communication units **CU(1); CU(2); ...; (CU(j));**
i) if the check by the control unit **215** is positive, transmitting the measurement data to the central acquisition system **180** by means of the communication channel *C1'* of the secondary communication mode *G2;*
j) acquiring by the central acquisition system **180** measurements indicative of gas deliveries.

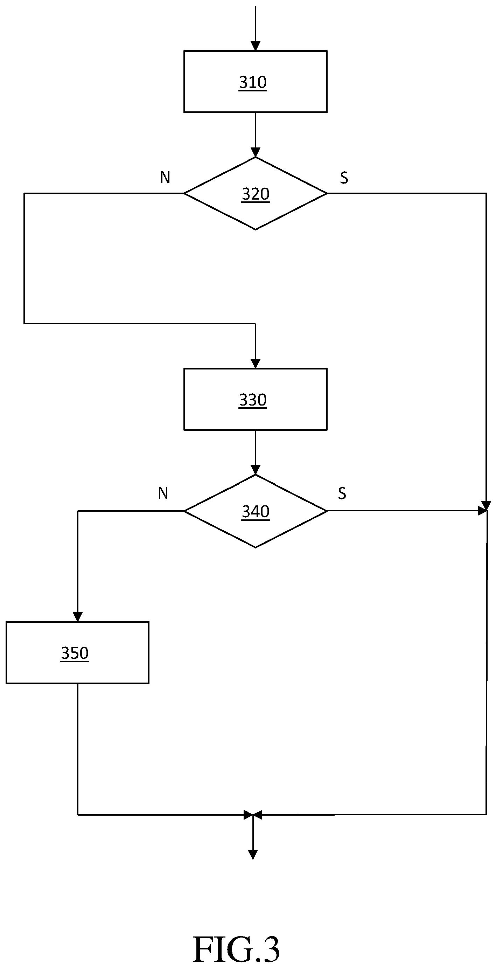

Referring to the flowchart of **Figure 3****,** according to an embodiment of the present invention, the control unit **215** of the generic gas meter **110(i)** is configured to transmit measurement data *M* to the central acquisition system **180** by periodically (e.g., once a day) performing the following sequence of operations.

According to an embodiment of the present invention, the control unit **215** firstly attempts to transmit the measurement data *M* to the central acquisition system **180** by means of the primary communication mode *G1* (block **310).** In this regard, according to an embodiment of the present invention, the control unit **215** controls a unit chosen from the communication units **CU(j)** available in the gas meter **110(i)** which are configured to exploit one of either NBIoT or LoRaWAN technologies. According to an embodiment of the present invention, if the gas meter **110(i)** is provided with multiple different communication units **CU(j)** capable of performing the primary communication mode *G1* (e.g., a communication unit **CU(j)** configured to communicate with NBIoT technology and a communication unit **CU(j)** configured to communicate with LoRaWAN technology), the control unit **215** can sequentially make multiple attempts using a different **CU(j)** communication unit (and thus a different transmission technology) every time.

According to an embodiment of the present invention, if the transmission of measurement data *M* to the central acquisition system **180** (output branch **S** of the block **320)** could be performed successfully, the sequence ends, ready to be repeated later (e.g., the following day).

According to an embodiment of the present invention, if none of the communication units **CU(j)** configured to transmit by means of the primary communication mode *G1* was successful in sending the measurement data *M* to the central acquisition system (output branch **N** of block **320),** the control unit **215** attempts to transmit the measurement data M to the central acquisition system **180** by means of the secondary communication mode *G2* (block **330).** It is emphasized that according to an embodiment, the secondary communication mode *G2* is advantageously employed only as a "backup" communication mode, following an unsuccessful attempt to use the primary communication mode *G1* because the secondary communication mode *G2* is an asynchronous communication mode (thus not allowing effective bidirectional communication), and using a non-negligible electrical power consumption.

In this regard, according to an embodiment of the present invention, the control unit **215** controls a unit chosen from the communication units **CU(j)** available in the gas meter **110(i)** which are configured to take advantage of one of the BLE or LoRaP2P technologies for the purpose of transmitting measurement data *M* to a nearby gas meter **110(k),** which will, if possible, forward the received measurement data *M* to the central acquisition system **180.** According to an embodiment of the present invention, if the gas meter **110(i)** is provided with multiple different communication units **CU(j)** capable of performing the secondary communication mode G2 (e.g., a communication unit **CU(j)** configured to communicate with BLE technology and a communication unit **CU(j)** configured to communicate with LoRaP2P technology), the control unit **215** can sequentially make multiple attempts using a different **CU(j)** communication unit (and thus a different transmission technology) each time.

According to an embodiment of the present invention, if the transmission of measurement data M to the central acquisition system **180** (output branch **S** of the block **340)** was performed successfully, the sequence ends, ready to be repeated later (e.g., the following day).

According to an embodiment of the present invention, if none of the communication units **CU(j)** configured to transmit by means of the secondary communication mode *G2* was successful in sending measurement data *M* to the central acquisition system (output branch **N** of block **340),** the control unit **215** saves (block **350)** locally - e.g., in the storage unit **230** - the measurement data M which were not transmitted, and the sequence ends, ready to be repeated later (e.g., the following day) with a new attempt to transmit the measurement data M which were not transmitted, along with any new measurement data M generated since the last unsuccessful transmission attempt.

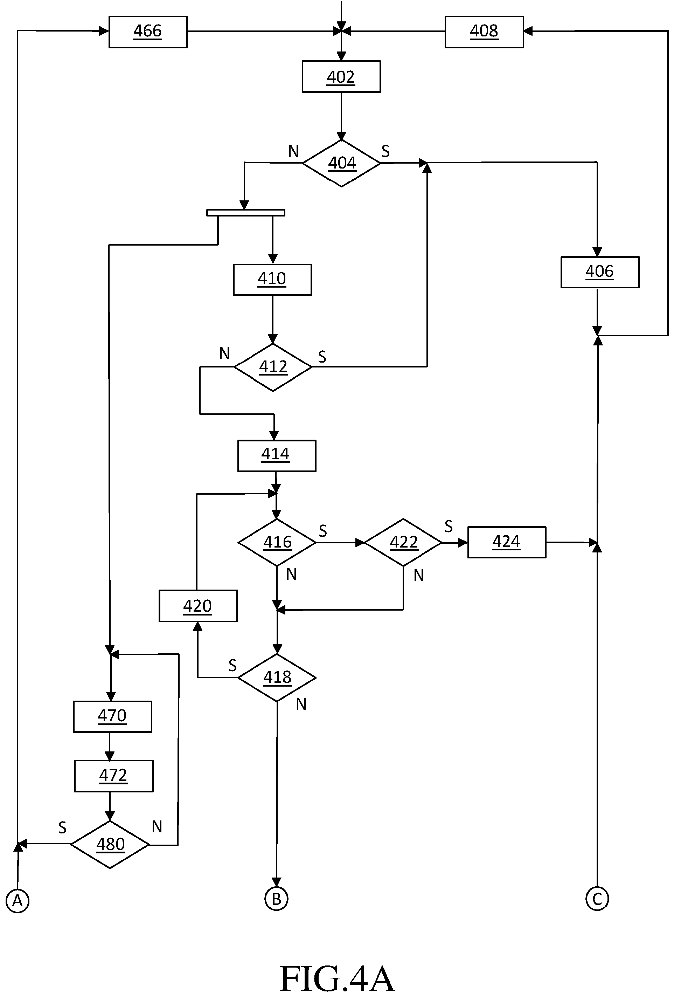

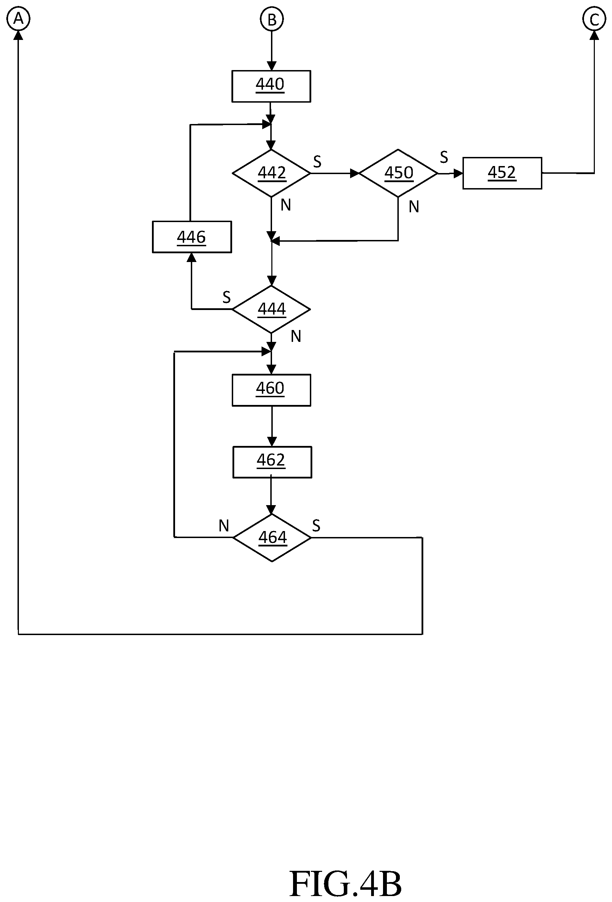

**Figures 4A** and **4B** illustrate in greater detail (in terms of functional blocks) the operations performed by the control unit **215** of a generic gas meter **110(i)** according to an embodiment of the present invention to manage the transmission of measurement data M to the central acquisition system **180** if the gas meter **110(i)** is provided with:
- a first communication unit **CU(1)** configured for NBIoT transmissions;
- a second communication unit **CU(2)** configured for LoRaWAN transmissions;
- a third communication unit **CU(3)** configured for BLE transmissions;
- a fourth communication unit **CU(4)** configured for LoRaP2P transmissions.

According to an embodiment of the present invention, the control unit **215** controls the communication unit **CU(1)** to establish a connection with (a transmitting and receiving station) of the communication network **185** (in this case, NBIoT network) by means of an NBIoT communication channel **C1** (block **402).**

According to an embodiment of the present invention, if the connection to the communication network **185** is successful (output branch **S** block **404),** the control unit **215** controls the communication unit **CU(1)** to send a data packet *PK* containing measurement data M from the gas meter **110(i)** to the central acquisition system **180** (block **406).** Therefore, according to an embodiment of the present invention, the data packet *PK* is sent to the communication network **185** by means of the NBIoT communication channel **C1** and forwarded from the communication network **185** to the central acquisition system **180** by means of an NBIoT communication channel **C1'.** The correct connection to the communication network **185** can be checked by the control unit **215** by means of any of known NBIoT network attachment checking procedures.

According to an embodiment of the present invention, the data packets *PK* may comprise one or more of the following additional data:
- possible alarm messages;
- possible error messages;
- data regarding recorded temperatures;
- data regarding recorded pressures;
- data regarding fire records;
- data regarding earthquake recordings.

According to an embodiment of the present invention, once the data packet *PK* has been sent to the central acquisition system **180,** the control unit **215** waits (block **408)** a predetermined time interval (e.g., one day) before attempting to command the **CU(1)** communication unit again to establish a connection with the NBIoT communication network **185** (return to block **402).**

According to an embodiment of the present invention, if the connection to the communication network **185** was not successful (output branch **N** of block **404),** the control unit **215** commands the communication **CU(2)** to establish a connection with (a transmitting and receiving station) of the communication network **185** (in this case, LoRaWAN network) by means of a LoRaWAN communication channel **C1** (block **410).**

According to an embodiment of the present invention, if the connection to the communication network **185** is successful (output branch **S** block **412),** the control unit **215** controls the communication unit **CU(2)** to send the data packet PK containing the measurement data *M* of the gas meter **110(i)** to the central acquisition system **180** (block **406).** Therefore, according to an embodiment of the present invention, the data packet *PK* is sent to the communication network **185** by means of the LoRaWAN **C1** and forwarded from the communication network **185** to the central acquisition system **180** by means of a LoRaWAN communication channel **C1'.** The correct connection to the communication network **185** can be checked by the control unit **215** by means of any one of the known LoRaWAN network backup procedures.

According to an embodiment of the present invention, also in this case, once the data packet *PK* has been sent to the central acquisition system **180,** the control unit **215** waits (block **408)** a predetermined time interval (e.g., one day) before attempting to command the communication unit **CU(1)** again to establish a connection with the NBIoT communication network **185** (return to block **402).**

According to an embodiment of the present invention, if the connection to the communication network **185** was not successful (output branch **N** of block **412),** it means that the gas meter **110(i)** is currently unable to allow communications according to the of primary communication modes *G1,* e.g., because of problems in the **185** communication network or because the site **105(i)** where the gas meter **110(i)** is installed is located in a location which is not under radio coverage by the communication network **185.** In this case, according to an embodiment of the present invention, the control unit **215** attempts to establish a "backup" communication according to the secondary communication mode *G2*. Therefore, according to an embodiment of the present invention, the control unit **215** selects from the proximity table *PT a* gas meter **110(k)** (k ≠ i) located near the gas meter **110(i)** (block **414).**

According to an embodiment of the present invention, the control unit **215** checks whether or not such a gas meter **110(k)** is or is not reachable from the communication unit **CU(3)** by means of a BLE communication channel **C2** (block **416).** For example, this check can be performed by means of one of the known connection checking procedures for P2P networks, based on whether or not the gas meter **110(k)** receives a response.

According to an embodiment of the present invention, if the gas meter **110(k)** turns out not to be reachable from the BLE communication channel **CU(3) C2** (output branch **N** of the block **416),** the control unit **215** checks whether in the proximity table *PT* there is a further gas meter **110(k)** (k ≠ i) located near the gas meter **110(i)** (block **418).**

According to an embodiment of the present invention, if there is a further gas meter **110(k)** in the proximity table *PT* located near the gas meter **110(i)** (output branch **S** of the block **418),** the control unit **215** selects the further gas meter **110(k)** (block **420)** and repeats the preceding operations to check whether the further gas meter **110(k)** is or is not reachable by the communication unit **CU(3)** by means of a BLE communication channel **C2** (return to block **416).**

According to an embodiment of the present invention, if the gas meter **110(k)** is reachable by the communication unit **CU(3)** through the BLE communication channel **C2** (output branch **S** of the block **416),** the control unit **215** checks whether the gas meter **110(k)** can or cannot communicate with the communication network **185** (NBIoT or LoRaWAN) by means of an NBIoT or LoRaWAN communication channel **C2'** (block **422).**

According to an embodiment of the present invention, if the gas meter **110(k)** cannot communicate with the communication network **185** (NBIoT or LoRaWAN) by means of an NBIoT or LoRaWAN communication channel **C2'** (output branch **N** of block **422),** the control unit **215** checks whether there is a further gas meter in the proximity table *PT* **110(k)** (k ≠ i) located near the gas meter **110(i)** (return to block **418).**

According to an embodiment of the present invention, if the gas meter **110(k)** can communicate with the communication network **185** (NBIoT or LoRaWAN) by means of an NBIoT or LoRaWAN communication channel **C2'** (output branch **S** of the block **422),** the control unit **215** controls the communication unit **CU(3)** to send a data packet *PK* containing measurement data *M* from the gas meter **110(i)** to the further gas meter **110(k)** by means of the BLE communication channel **C2** (block **424).** The data packet *PK* received by the communication unit **CU(3)** of the further gas meter **110(k)** is then transmitted to the central acquisition system **180** by the communication unit **CU(1) or CU(2)** of the further gas meter **110(k)** through the communication network **185** (NBIoT or LoRaWAN) by means of the NBIoT or LoRaWAN communication channels **C2'** and **C1'.**

At this point, according to an embodiment of the present invention, the control unit **215** waits (block **408)** a predetermined time interval (e.g., one day) before attempting to command the communication unit **CU(1)** again to establish a connection with the NBIoT communication network **185** (return to block **402).**

According to an embodiment of the present invention, if none of the gas meters **110(k)** listed in the proximity table *PT* can receive the data packet *PK* from the gas meter **110(i)** by means of the BLE communication channel **C2** nor forward the data packet *PK* received to the central acquisition system **180** through the communication network **185** (NBIoT or LoRaWAN) by means of the NBIoT or LoRaWAN communication channels **C2'** and **C1',** or if the proximity table *PT* is empty (output branch **N** of the block **418),** the control unit **215** attempts to establish a "backup" communication by exploiting a LoRaP2P communication channel**C2.**

Therefore, according to an embodiment of the present invention, the control unit **215** selects in the proximity table *PT* a gas meter **110(k)** (k ≠ i) located near the gas meter **110(i)** (block **440).**

According to an embodiment of the present invention, the control unit **215** checks whether or not the gas meter **110(k)** is or is not reachable from the communication unit **CU(4)** by means of a LoRaP2P communication channel **C2** (block **442).** For example, this check can be performed by means of one of the known connection checking procedures for P2P networks, based on whether or not the gas meter **110(k)** receives a response.

According to an embodiment of the present invention, if the gas meter **110(k)** is not reachable from the LoRaP2P communication channel **CU(4) C2** (output branch **N** of the block **442),** the control unit **215** checks if in the proximity table *PT* there is a further gas meter **110(k)** (k ≠ i) located near the gas meter **110(i)** (block **444).**

According to an embodiment of the present invention, if there is a further gas meter **110(k)** in the proximity table *PT* located near the gas meter **110(i)** (output branch **S** of block **444),** the control unit **215** selects the further gas meter **110(1)** (block **446)** and repeats the preceding operations to check whether the further gas meter **110(k)** is or is not reachable from communication unit **CU(4)** by means of a LoRaP2P communication channel **C2** (return to block **442).**

According to an embodiment of the present invention, if the gas meter **110(k)** is reachable by the communication unit **CU(4)** through the LoRaP2P communication channel **C2** BLE (output branch **S** of the block **442),** the control unit **215** checks whether the gas meter **110(k)** can or cannot communicate with the communication network **185** (NBIoT or LoRaWAN) by means of a communication channel **C2'** NBIoT or LoRaWAN (block **450).**

According to an embodiment of the present invention, if the gas meter **110(k)** cannot communicate with the communication network **185** (NBIoT or LoRaWAN) by means of an NBIoT or LoRaWAN communication channel **C2'** (output branch **N** of block **450),** the **215** control unit checks whether there is a further gas meter in the *PT* proximity table **110(k)** (k ≠ i) located near the gas meter **110(i)** (return to block **444).**

According to an embodiment of the present invention, if the gas meter **110(k)** can communicate with the communication network **185** (NBIoT or LoRaWAN) by means of an NBIoT or LoRaWAN communication channel **C2' (S** output branch of the **450** block), the control unit **215** controls the communication unit **CU(4)** to send a data packet *PK* containing measurement data *M* from the gas meter **110(i)** to the further gas meter **110(k)** by means of the LoRaP2P communication channel **C2** (block **452).** The data packet PK received by the communication unit **CU(4)** of the further gas meter **110(k)** is then transmitted to the central acquisition system **180** by the communication unit **CU(1)** or **CU(2)** of the further gas meter **110(k)** through the communication network **185** (NBIoT or LoRaWAN) by means of the NBIoT or LoRaWAN communication channels **C2'** and **C1'.**

At this point, according to an embodiment of the present invention, the control unit **215** waits (block **408)** a predetermined time interval (e.g., one day) before attempting to command the communication unit **CU(1)** again to establish a connection with the NBIoT communication network **185** (return to block **402).**

According to an embodiment of the present invention, if none of the gas meters **110(k)** listed in the proximity table *PT* can receive the data packet *PK* from the gas meter **110(i)** by means of the LoRaP2P communication channel **C2,** to forward the data packet *PK* received to the central acquisition system **180** over the communication network **185** (NBIoT or LoRaWAN) by means of the NBIoT or LoRaWAN communication channels **C2'** and **C1',** or if the proximity table *PT* is empty (output branch **N** of the block **444),** the gas meter **110(i)** cannot communicate with the central acquisition system **180.** In this situation, according to an embodiment of the present invention, the control unit **215** switches the operation of the gas meter **110(i)** into a "metrology mode" in which the measurement data M are stored locally in the memory unit **230** without being transmitted to the central acquisition system **180** (block **460).**

According to an embodiment of the present invention, the control unit **215** keeps the gas meter **110(i)** in metrology mode for a predetermined time interval *TM,* e.g., 15 days (block **462).**

According to an embodiment of the present invention, upon the expiration of the predetermined time interval *TM,* the control unit **215** checks whether it has now become possible to establish an NBIoT communication (block **464).**

According to an embodiment of the present invention, if an NBIoT communication (output branch **N** of block **464)** could not yet be established, the control unit **215** still keeps the gas meter **110(i)** in the metrology mode (return to block **460).**

According to an embodiment of the present invention, if at the expiration of the predetermined time interval *TM* it is again possible to establish NBIoT communication (output branch **S** of block **464),** the control unit **215** interrupts the metrology mode of the gas meter **110(i)** (block **466),** and commands the communication unit **CU(1)** to establish a connection with (a transmitting and receiving station) of the NBIoT communication network **185** by means of an NBIoT communication channel **C1** (return to block **402).** In this case, the data packet *PK* may also contain multiple measurement data *M*, related to the period passed by the gas meter **110(i)** in metrology mode.

Returning to the **404** block, according to an embodiment of the present invention, if the connection to the NBIoT communication network **185** is not successful (output branch **N** of block **404),** in parallel with the operations already described, the control unit **215** starts a timer *TRS* for a predetermined time (e.g., equal to 180 days) (block **470),** and when that timer *TRS* expires, it performs a reset of the NBIoT modem of the communication unit **CU(1)** (block **472).**

According to an embodiment of the present invention, if after the NBIoT modem reset, it was still not possible to establish an NBIoT communication (output branch **N** of the **480** block), the control unit **215** re-initializes the *TRS* timer for a subsequent NBIoT modem reset (return to block **470).**

According to an embodiment of the present invention, if an NBIoT communication (output branch **S** of block **480)** could be established after the NBIoT modem reset, the control unit **215** interrupts (if present) the metrology mode of the gas meter **110(i)** (block **466),** and commands the communication unit **CU(1)** to establish a connection with (a transmitting and receiving station) of the NBIoT communication network **185** by means of an NBIoT communication channel **C1** (back to block **402).**

It is emphasized that although the operations described in **Figures 4A** and **4B** involve a definite sequence of communication technologies, wherein the first to be tried is the NBIoT technology, followed sequentially by the LoRaWAN, BLE, and LoRaP2P technologies, the concepts of the present invention can be applied to different sequences of communication technologies, provided that the communication technologies related to the primary communication mode *G1* are executed before those related to the secondary communication mode *G2.* For example, the first communication technology to be tried may be LoRaWAN technology, followed sequentially by NBIoT, BLE and LoRaP2P technologies, or sequentially by NBIoT, LoRaP2P and BLE technologies.

Furthermore, the concepts of the present invention can also be applied to sequences of a different number of different communication technologies. For example, some of the communication technologies - such as LoRaWAN technology and/or LoRaP2P technology - may not be provided, or additional communication technologies - such as LoRaRelay technology or ZigBee technology - may be provided.

For example, according to an embodiment of the present invention, the gas meter **110(i)** can be provided with a communication unit **CU(j)** configured to connect with a LoRaWAN network station by exploiting a communication unit of a neighboring gas meter as a LoRaRelay node.

According to one embodiment of the present invention, in case only the secondary communication mode G2 (exploiting, for example, a BLE or LoRaP2P communication channel **C2)** is available, the content of the data packet *PK* could be reduced (e.g., containing only the measurement data *M*) to minimize wasted electrical power.

Of course, to meet local and specific requirements, a person skilled in the art can apply various logical and/or physical modifications and alterations to the above invention. More specifically, although the present invention has been described with some degree of particularity with reference to its preferred embodiment, it should be understood that various omissions, substitutions, and modifications in form and detail, and other embodiments are possible. In particular, various embodiments of the invention may also be put into practice without the specific details given in the preceding description to provide a deeper understanding of it; conversely, well-known functions may have been omitted or simplified so as not to burden the description with unnecessary details.

### Example of use

The table shows a plurality of data related to data reception performance, collected by an ad hoc detection system, transmitted by:
- a prior art gas smart meter (named "prior art" in the table) configured with only one communication technology (the NBIOT technology), and

| ***Location*** | **Prior art** | | | | **Object of the present invention** | | | |
|---|---|---|---|---|---|---|---|---|
| | ***NBIOT*** | ***LORAWAN*** | ***(BLE and LoraP2P)*** | ***Total performance* (%)** | ***NBIOT*** | ***LORAWAN*** | ***(BLE and LoraP2P)*** | ***Total performance* (%)** |
| **Villafranca in** | | | | | | | | |
| **Lunigiana (MS)** | 86.50% | 0.00% | 0.00% | 86.50% | 95.50% | 1.08% | 2.51% | 99.09% |
| **Rome** | 75.35% | 0.00% | 0.00% | 75.35% | 92.41% | 2.86% | 2.97% | 98.24% |
| **Cosenza** | 83.95% | 0.00% | 0.00% | 83.95% | 93.38% | 2.98% | 2.52% | 98.88% |

- _a gas smart meter of the present invention (referred to as the object of the present invention in the table), provided with two communication units, according to the primary communication mode G1*,* each configured with an NBIOT technology, and a LORAWAN technology, respectively, and two communication units, according to the secondary communication mode G2, each configured with a BLE technology and a LoraP2P technology, respectively.

Three physical installation sites, Villafranca in Lunigiana (MS), Rome, and Cosenza, are shown in the table. The gas smart meter according to the present invention was installed at exactly the same customer's location to replace the prior art gas smart meter at the same physical site, allowing a direct comparison of performance at the same physical sites between the two types of meters.

As shown in the table, for example, the performance value of the prior art gas smart meter by means of NBIOT technology for the Rome site being 75.35% is significantly lower than the performance value 98.24% obtained for the same physical site by the gas smart meter according to the present invention, by cascade activation of NBIOT, LORAWAN, BLE and Lora P2P technologies, allowing for high performance and remarkable reliability in the transmission of measurement data.

## Claims

1. A gas meter **(110(i))** comprising:
- a metering unit **(225)** to generate measurements indicating gas deliveries, said metering unit being operationally connected to a control unit **(215)** to send the generated measurements to said control unit **(215);**
- a first plurality of wireless communication units **(CU(1); CU(2);...; (CU(j))** configured to communicate with a remote acquisition system **(180)** exploiting a first type of wireless communication link and to send the generated measurements, previously received by said control unit (215), each unit of said first plurality of wireless communication units **(CU(1); CU(2);...; (CU(j))** is configured with a communication link, wherein said first type of wireless communication link is based on a network infrastructure wherein the first plurality of wireless communication units **(CU(1); CU(2);...; (CU(j))** communicate using communication technologies that are different from each other;
- a second plurality of wireless communication units **(CU(1); CU(2);...; (CU(j))** configured to communicate with the remote acquisition system **(180)** exploiting a second type of wireless communication link other than said first type of wireless communication link and to send the generated measurements, previously received from said control unit **(215);** each unit of said second plurality of wireless communication units **(CU(1); CU(2);...; (CU(j))** is configured with a communication link, wherein the second plurality of wireless communication units **(CU(1); CU(2);...; (CU(j))** communicate using communication technologies that are different from each other;
- said control unit **(215)** configured to transmit measurements to said remote acquisition system **(180)** by means of said first communication mode or said second communication mode, and to make a plurality of measurement transmission attempts by controlling in sequence said first and second plurality of wireless communication units **(CU(1); CU(2);...; (CU(j)),** and said communication links of each of said first and second plurality of wireless communication units **(CU(1); CU(2);...; (CU(j)),** wherein:
- said first type of wireless communication link comprises a first type of wireless communication link **(C1; C2')** between the gas meter and a communication network-transmitting and receiving station **(185)** in communication with the remote acquisition system **(180);**
- said second type of wireless communication link comprises a second type of wireless communication link **(C2)** between the gas meter **(110(i))** and one chosen from a group of other gas meters **(110(k)),** wherein:
- the control unit **(215)** is configured to send said measurements by performing the following sequence of operations:
- controlling said first communication plurality **(CU(1); CU(2);** ...; **(CU(j))** to send said measurements to the remote acquisition system **(180)** by exploiting said first type of wireless communication link **(C1; C2');**
- if said first type of wireless communication link **(C1; C2')** is not available, controlling said second communication plurality **(CU(1); CU(2);...; (CU(j))** to send said measurements to the remote acquisition system **(180)** by exploiting at least said second type of wireless communication link **(C2).**

2. A gas meter **(110(i))** according to claim 1, wherein:
- said first type of wireless link **(C1; C2')** and second type of wireless link comprise a wireless communication link that exploits licensed frequency bands and a wireless communication link that exploits unlicensed frequency bands;
- said wireless communication link that exploits licensed frequency bands comprises at least one of:
- an NB-IoT type communication link;
- a GPRS communication link;
- a UMTS communication link;
- a GSM communication link;
- an LTE communication link;
- a 5G communication link;
- a 6G communication link.
- said wireless communication link that exploits unlicensed frequency bands comprises at least one of:
- a wireless MBus type communication link, such as 169 MHz;
- a LoRa type communication link, in particular a LoRaWAN link and/or a LoRaP2P link;
- a Bluetooth type communication link;
- a BLE type communication link;
- a 6LoWPAN type communication link;
- a ZigBee type communication link.

3. A gas meter **(110(i))** according to claims 1 and 2, comprising at least one of said first plurality of wireless communication units **(CU(1); CU(2);...; (CU(j))** configured to send the measurements by means of said wireless communication link based on licensed frequency bands and at least one of said second plurality of wireless communication units **(CU(1); CU(2);...; (CU(j))** configured to send measurements by means of said wireless communication link based on unlicensed frequency bands.

4. A gas meter **(110(i))** according to claim 1 or 2 , wherein:
- said first type of wireless link is a link based on a network infrastructure;
- said second type of wireless link is a P2P type of link.

5. A gas meter **(110(i))** according to one of claims from 1 to 4, wherein said control unit **(215)** is configured to perform the following sequence of operations:
- control said second communication plurality **(CU(1); CU(2); ... (CU(j))** to receive from a further gas meter of said group of other gas meters measurements generated by said further gas meter by exploiting said second wireless communication type **(C2);**
- control said first communication plurality **(CU(1); CU(2); ... (CU(j))** to send said received measurements generated by said further gas meter to the remote acquisition system by exploiting said first type of wireless communication link **(C2').**

6. A gas meter **(110(i))** according to one of claims from 1 to 5, wherein said first type of wireless communication link **(C1; C2')** comprises one or more wireless communication links between:
- an NB-IoT type communication link between a first unit of said plurality of communication units **(CU(1); CU(2); ... (CU(j))** of the gas meter and a station of an NB-IoT network;
- a LoraWAN type communication link between a first communication unit **(CU(1); CU(2); ... (CU(j))** of the gas meter and a station of a LoraWAN network.

7. A gas meter **(110(i))** according to claim 6, wherein said LoraWAN type communication link is made by means of a LoraRelay node, in particular a communication unit of one of the group's other gas meters.

8. A gas meter **(110(i))** according to claim 6 or 7, wherein the gas meter **(110(i))** comprises two or more first communication units **(CU(1); CU(2); ...; (CU(j))** each configured to communicate with the remote acquisition system **(180)** by exploiting a different wireless communication link, said the control unit **(215)** being configured to control in sequence said first communication units **(CU(j))** to send said measurements, by exploiting respective wireless communication links, to the remote acquisition system **(180).**

9. A gas meter according to one of the preceding claims, wherein said second type of wireless communication link **(C2)** comprises two or more wireless communication links between:
- a BLE communication link between a second communication unit **(CU(1); CU(2); ...; (CU(j))** of the gas meter and a second communication unit of one of the group's other gas meters;
- a LoraP2P communication link between a second communication unit **(CU(1); CU(2); ...; (CU(j))** of the gas meter and a second communication unit of one of the group's other gas meters.
- a ZigBee communication link between a second communication unit **(CU(1); CU(2); ...; (CU(j))** of the gas meter and a second communication unit of one of the group's other gas meters.

10. A gas meter **(110(i))** according to claim 10, wherein the gas meter **(110(i))** comprises two or more second communication units **(CU(1); CU(2); ...; (CU(j))** each configured to communicate with the remote acquisition system **(180)** by exploiting a different wireless communication link, said the control unit **(215)** being configured to control in sequence said second communication units **(CU(1); CU(2);... (CU(j))** to send said measurements, by exploiting respective wireless communication links, to the remote acquisition system **(180).**

11. A gas meter **(110(i))** according to one of the preceding claims, wherein:
- the control unit **(215)** is configured to generate a proximity table which lists said group of other gas meters;
- said group of other gas meters comprises other gas meters sufficiently close to said gas meter to ensure a potential second type of wireless communication link **(C2).**

12. A method of transmitting to a central acquisition system **(180)** indicative measurements of gas deliveries generated by a gas meter **(110(i))** according to claim 1 at a plurality of sites **(105(i)),** the central acquisition system being a remote acquisition system, the method comprising the steps of:
a) selecting and activating by a control unit **(215)** a first communication unit **(CU(1))** of a first plurality of communication units **(CU(1); CU(2);...; (CU(j))** to establish a connection with a communication network-transmitting and receiving station (185); by means of a wireless communication channel **(C1)** of a primary communication mode **(G1);**
b) if the connection was successful, transmitting measurement data to a central acquisition system **(180)** by means of a communication channel **(C1')** of said primary communication mode **(G1);**
c) acquiring by said central acquisition system (180) said measurements indicative of gas deliveries.
d) if the connection was not successful, reiterating (from **2** to **j)** the steps from a) to b) for each communication unit (from **CU(2)** to **CU(j))** of said first plurality of communication units **(CU(1); CU(2); ...; (CU(j));**
e) if during the reiteration **(j)** the connection was not successful, selecting and activating by said control unit **(215)** a first communication unit **(CU(1))** of a second plurality of communication units **(CU(1); CU(2);...; (CU(j))** to establish a connection with a gas meter **(110(k))** with k=i by means of a communication channel **(C2)** of a secondary communication mode **(G2);**
f) if the connection was not successful, reiterating (from **2** to **j)** step e) for each communication unit (from **CU(2)** to **CU(j))** of said second plurality of communication units **CU(1); CU(2); ...; (CU(j));**
g) if the connection was successful, connecting and checking said control unit **(215)** of the communication by means of a communication channel **(C2')** of said secondary communication mode **(G2),** between said gas meter (110(k) and said wireless communication network **(185);**
h) if the check by said control unit **(215)** is negative, reiterating (from **2** to **j)** step g) for each communication unit (from **CU(2)** to **CU(j))** of said second plurality of communication units **CU(1); CU(2); ...; (CU(j));**
i) if the check by said control unit **(215)** is positive, transmitting measurement data to the central acquisition system **(180)** by means of a communication channel **(C1')** of said secondary communication mode **(G2);**
j) acquiring by said central acquisition system **(180)** said measurements indicative of gas deliveries.

13. A method according to claim 12, wherein if none of the meters **(110(k))** can receive the measurement data from said gas meter **(110(i))** by means of said communication channel **(C2),** nor forward the received measurement data to the central acquisition system **(180)** by means of the communication network **(185)** by means of the channels **(C2')** and **(C1'),** said control unit **(215)** stores the measurement data in a memory unit of said gas meter **(110(i)).**

14. A system **(100)** for acquiring measurements indicative of gas deliveries at a plurality of sites **(105(i)),** said system comprising:
- a gas meter **(110(i))** installed at each of said sites, said gas meter being configured to generate measurements indicative of gas deliveries at the site where it is installed;
- a remote acquisition system **(180)** configured to receive from gas meters said measurements, wherein:
each gas meter is a gas meter according to one of the preceding claims.

## Patentansprüche

1. Gaszähler **(110(i)**), umfassend:
- eine Zähleinheit (**225**) zur Erzeugung von Messwerten, die Gaslieferungen angeben, wobei die Zähleinheit betriebswirksam mit einer Steuereinheit (**215**) verbunden ist, um die erzeugten Messwerte an die Steuereinheit (**215**) zu senden;
- eine erste Vielzahl von drahtlosen Kommunikationseinheiten **(CU(1); CU(2); ...; (CU(j)**), die ausgelegt sind, um unter Nutzung einer ersten Art von drahtloser Kommunikationsverbindung mit einem Fernerfassungssystem (**180**) zu kommunizieren und die zuvor durch die Steuereinheit (**215**) empfangenen erzeugten Messwerte zu senden, wobei jede Einheit der ersten Vielzahl von drahtlosen Kommunikationseinheiten (**CU(1); CU(2); ...; (CU(j)**) mit einer Kommunikationsverbindung ausgelegt ist, wobei die erste Art von drahtloser Kommunikationsverbindung auf einer Netzwerkinfrastruktur basiert, wobei die erste Vielzahl von drahtlosen Kommunikationseinheiten (**CU(1); CU(2); ...; (CU(j)**) unter Verwendung von Kommunikationstechnologien, die sich voneinander unterscheiden, kommuniziert;
- eine zweite Vielzahl von drahtlosen Kommunikationseinheiten **(CU(1); CU(2); ...; (CU(j)**), die ausgelegt sind, um unter Nutzung einer zweiten Art von drahtloser Kommunikationsverbindung mit dem Fernerfassungssystem (**180**) zu kommunizieren und die zuvor von der Steuereinheit (**215**) empfangenen erzeugten Messwerte zu senden, wobei jede Einheit der zweiten Vielzahl von drahtlosen Kommunikationseinheiten **(CU(1); CU(2); ...; (CU(j)**) mit einer Kommunikationsverbindung ausgelegt ist, wobei die zweite Vielzahl von drahtlosen Kommunikationseinheiten **(CU(1); CU(2); ...; (CU(j)**) unter Verwendung von Kommunikationstechnologien, die sich voneinander unterscheiden, kommuniziert,
- wobei die Steuereinheit (**215**) ausgelegt ist, um Messwerte mittels des ersten Kommunikationsmodus oder des zweiten Kommunikationsmodus an das Fernerfassungssystem (**180**) zu übertragen und eine Vielzahl von Messwertübertragungsversuchen durchzuführen, indem sie nacheinander die erste und zweite Vielzahl von drahtlosen Kommunikationseinheiten **(CU(1); CU(2); ...; (CU(j)**) sowie die Kommunikationsverbindungen jeder der ersten und zweiten Vielzahl von drahtlosen Kommunikationseinheiten **(CU(1); CU(2); ...; (CU(j)**) steuert, wobei:
- die erste Art von drahtloser Kommunikationsverbindung eine erste Art von drahtloser Kommunikationsverbindung (**C1**; **C2'**) zwischen dem Gaszähler und einer Kommunikationsnetzwerkübertragungs- und -empfangsstation (185) in Kommunikation mit dem Fernerfassungssystem (**180**) umfasst;
- die zweite Art von drahtloser Kommunikationsverbindung eine zweite Art von drahtloser Kommunikationsverbindung (**C2**) zwischen dem Gaszähler **(110(i)**) und einem aus einer Gruppe anderer Gaszähler **(110(k)**) ausgewählten umfasst, wobei:
- die Steuereinheit (**215**) ausgelegt ist, um die Messwerte durch Durchführen der folgenden Abfolge von Vorgängen zu senden:
- Steuern der ersten Kommunikationsvielzahl **(CU(1); CU(2); ...; (CU(j)**), sodass die Messwerte unter Nutzung der ersten Art von drahtloser Kommunikationsverbindung (**C1**; **C2'**) an das Fernerfassungssystem (**180**) gesendet werden;
- falls die erste Art von drahtloser Kommunikationsverbindung (**C1**; **C2'**) nicht verfügbar ist, Steuern der zweiten Kommunikationsvielzahl **(CU(1); CU(2); ...; (CU(j)**), sodass die Messwerte unter Nutzung zumindest der zweiten Art von drahtloser Kommunikationsverbindung (**C2**) an das Fernerfassungssystem (**180**) gesendet werden.

2. Gaszähler **(110(i)**) nach Anspruch 1, wobei:
- die erste Art von drahtloser Verbindung (**C1**; **C2'**) und die zweite Art von drahtloser Verbindung eine drahtlose Kommunikationsverbindung, die lizenzierte Frequenzbänder nutzt, und eine drahtlose Kommunikationsverbindung, die nicht lizenzierte Frequenzbänder nutzt, umfassen;
- die drahtlose Kommunikationsverbindung, die lizenzierte Frequenzbänder nutzt, mindestens eine der folgenden Verbindungen umfasst:
- eine Kommunikationsverbindung vom NB-IoT-Typ;
- eine GPRS-Kommunikationsverbindung;
- eine UMTS-Kommunikationsverbindung;
- eine GSM-Kommunikationsverbindung;
- eine LTE-Kommunikationsverbindung;
- eine 5G-Kommunikationsverbindung;
- eine 6G-Kommunikationsverbindung,
- wobei die drahtlose Kommunikationsverbindung, die nicht lizenzierte Frequenzbänder nutzt, mindestens eine der folgenden Verbindungen umfasst:
- eine drahtlose Kommunikationsverbindung vom MBus-Typ wie 169 MHz;
- eine Kommunikationsverbindung vom LoRa-Typ, insbesondere eine LoRaWAN-Verbindung und/oder eine LoRaP2P-Verbindung;
- eine Kommunikationsverbindung vom Bluetooth-Typ;
- eine Kommunikationsverbindung vom BLE-Typ;
- eine Kommunikationsverbindung vom 6LoWPAN-Typ;
- eine Kommunikationsverbindung vom ZigBee-Typ.

3. Gaszähler **(110(i)**) nach den Ansprüchen 1 und 2, umfassend mindestens eine der ersten Vielzahl von drahtlosen Kommunikationseinheiten **(CU(1); CU(2); ...; (CU(j)**), ausgelegt, um die Messwerte mittels der drahtlosen Kommunikationsverbindung basierend auf lizenzierten Frequenzbändern zu senden, und mindestens eine der zweiten Vielzahl von drahtlosen Kommunikationseinheiten **(CU(1); CU(2); ...; (CU(j)**), ausgelegt, um Messwerte mittels der drahtlosen Kommunikationsverbindung basierend auf nicht lizenzierten Frequenzbändern zu senden.

4. Gaszähler **(110(i)**) nach Anspruch 1 oder 2, wobei:
- die erste Art von drahtloser Verbindung eine auf einer Netzwerkinfrastruktur basierende Verbindung ist;
- die zweite Art von drahtloser Verbindung eine Verbindung vom P2P-Typ ist.

5. Gaszähler **(110(i)**) nach einem der Ansprüche 1 bis 4, wobei die Steuereinheit (**215**) ausgelegt ist, um die folgende Abfolge von Vorgängen durchzuführen:
- Steuern der zweiten Kommunikationsvielzahl **(CU(1); CU(2); ...; (CU(j)**), sodass von einem weiteren Gaszähler der Gruppe anderer Gaszähler durch diesen weiteren Gaszähler erzeugte Messwerte unter Nutzung der zweiten Art von drahtloser Kommunikation (**C2**) empfangen werden;
- Steuern der ersten Kommunikationsvielzahl **(CU(1); CU(2); ...; (CU(j)**), sodass die empfangenen, durch den weiteren Gaszähler erzeugten Messwerte unter Nutzung der ersten Art von drahtloser Kommunikationsverbindung (**C2'**) an das Fernerfassungssystem gesendet werden.

6. Gaszähler **(110(i)**) nach einem der Ansprüche 1 bis 5, wobei die erste Art von drahtloser Kommunikationsverbindung (**C1**; **C2'**) eine oder mehrere der folgenden drahtlosen Kommunikationsverbindungen umfasst:
- eine Kommunikationsverbindung vom NB-IoT-Typ zwischen einer ersten Einheit der Vielzahl von Kommunikationseinheiten **(CU(1); CU(2); ...; (CU(j)**) des Gaszählers und einer Station eines NB-IoT-Netzwerks;
- eine Kommunikationsverbindung vom LoraWAN-Typ zwischen einer ersten Kommunikationseinheit **(CU(1); CU(2); ...; (CU(j)**) des Gaszählers und einer Station eines LoraWAN-Netzwerks.

7. Gaszähler **(110(i)**) nach Anspruch 6, wobei die Kommunikationsverbindung vom LoRaWAN-Typ mittels eines LoRaRelay-Knotens hergestellt wird, insbesondere einer Kommunikationseinheit eines der anderen Gaszähler der Gruppe.

8. Gaszähler **(110(i)**) nach Anspruch 6 oder 7, wobei der Gaszähler **(110(i)**) zwei oder mehr erste Kommunikationseinheiten **(CU(1); CU(2); ...; (CU(j)**) umfasst, die jeweils ausgelegt sind, um mit dem Fernerfassungssystem (**180**) unter Nutzung einer unterschiedlichen drahtlosen Kommunikationsverbindung zu kommunizieren, wobei die Steuereinheit (**215**) ausgelegt ist, um die ersten Kommunikationseinheiten **(CU(j)**) nacheinander so zu steuern, dass die Messwerte unter Nutzung jeweiliger drahtloser Kommunikationsverbindungen an das Fernerfassungssystem (**180**) gesendet werden.

9. Gaszähler nach einem der vorhergehenden Ansprüche, wobei die zweite Art von drahtloser Kommunikationsverbindung (**C2**) zwei oder mehr der folgenden drahtlosen Kommunikationsverbindungen umfasst:
- eine BLE-Kommunikationsverbindung zwischen einer zweiten Kommunikationseinheit (**CU(1); CU(2); ...; (CU(j)**) des Gaszählers und einer zweiten Kommunikationseinheit eines der anderen Gaszähler der Gruppe;
- eine LoraP2P-Kommunikationsverbindung zwischen einer zweiten Kommunikationseinheit (**CU(1); CU(2); ...; (CU(j)**) des Gaszählers und einer zweiten Kommunikationseinheit eines der anderen Gaszähler der Gruppe;
- eine ZigBee-Kommunikationsverbindung zwischen einer zweiten Kommunikationseinheit (**CU(1); CU(2); ...; (CU(j)**) des Gaszählers und einer zweiten Kommunikationseinheit eines der anderen Gaszähler der Gruppe.

10. Gaszähler **(110(i)**) nach Anspruch 10, wobei der Gaszähler **(110(i)**) zwei oder mehr zweite Kommunikationseinheiten **(CU(1); CU(2); ...; (CU(j)**) umfasst, die jeweils ausgelegt sind, um mit dem Fernerfassungssystem (**180**) unter Nutzung einer unterschiedlichen drahtlosen Kommunikationsverbindung zu kommunizieren, wobei die Steuereinheit (**215**) ausgelegt ist, um die zweiten Kommunikationseinheiten **(CU(1); CU(2); ...; (CU(j)**) nacheinander so zu steuern, dass die Messwerte unter Nutzung jeweiliger drahtloser Kommunikationsverbindungen an das Fernerfassungssystem (**180**) gesendet werden.

11. Gaszähler **(110(i)**) nach einem der vorhergehenden Ansprüche, wobei:
- die Steuereinheit (**215**) ausgelegt ist, um eine Näherungstabelle zu erzeugen, in der die Gruppe anderer Gaszähler aufgeführt ist;
- die Gruppe anderer Gaszähler andere Gaszähler umfasst, die sich in ausreichender Nähe zu dem Gaszähler befinden, um eine mögliche zweite Art von drahtloser Kommunikationsverbindung (**C2**) zu gewährleisten.

12. Verfahren zur Übertragen von durch einen Gaszähler **(110(i)**) nach Anspruch 1 an einer Vielzahl von Standorten **(105(i)**) erzeugten hinweisenden Messwerten von Gaslieferungen an ein zentrales Erfassungssystem (**180**), wobei das zentrale Erfassungssystem ein Fernerfassungssystem ist, wobei das Verfahren die folgenden Schritte umfasst:
a) Auswählen und Aktivieren einer ersten Kommunikationseinheit **(CU(1)**) einer ersten Vielzahl von Kommunikationseinheiten **(CU(1); CU(2); ...; (CU(j)**) durch eine Steuereinheit (**215**) zum Aufbau einer Verbindung mit einer Übertragungs- und Empfangsstation eines Kommunikationsnetzes (**185**) mittels eines drahtlosen Kommunikationskanals (**C1**) eines primären Kommunikationsmodus (**G1**);
b) falls die Verbindung erfolgreich hergestellt wurde, Übertragen von Messdaten an ein zentrales Erfassungssystem (**180**) mittels eines Kommunikationskanals (**C1'**) des primären Kommunikationsmodus (**G1**);
c) Erfassen der auf Gaslieferungen hinweisenden Messwerte durch das zentrale Erfassungssystem (**180**);
d) falls die Verbindung nicht erfolgreich hergestellt wurde, Wiederholen (von **2** bis **j**) der Schritte a) bis b) für jede Kommunikationseinheit (von **CU(2)** bis **CU(j)**) der ersten Vielzahl von Kommunikationseinheiten **(CU(1); CU(2); ...; (CU(j)**);
e) falls während der Wiederholung (**j**) die Verbindung nicht erfolgreich hergestellt wurde, Auswählen und Aktivieren einer ersten Kommunikationseinheit **(CU(1)**) einer zweiten Vielzahl von Kommunikationseinheiten **(CU(1); CU(2); ...; (CU(j)**) durch die Steuereinheit (**215**), um mittels eines Kommunikationskanals (**C2**) eines sekundären Kommunikationsmodus (**G2**) eine Verbindung mit einem Gaszähler **(110(k)**) herzustellen, wobei k = i gilt;
f) falls die Verbindung nicht erfolgreich hergestellt wurde, Wiederholen (von **2** bis **j**) von Schritt e) für jede Kommunikationseinheit (von **CU(2)** bis **CU(j)**) der zweiten Vielzahl von Kommunikationseinheiten **(CU(1); CU(2); ...; (CU(j)**);
g) falls die Verbindung erfolgreich hergestellt wurde, Verbinden und Überprüfen der Steuereinheit (**215**) der Kommunikation mittels eines Kommunikationskanals (**C2'**) des sekundären Kommunikationsmodus (**G2**) zwischen dem Gaszähler **(110(k)**) und dem drahtlosen Kommunikationsnetzwerk (**185**);
h) falls die Überprüfung durch die Steuereinheit (**215**) negativ ausfällt, Wiederholen (von **2** bis **j**) von Schritt g) für jede Kommunikationseinheit (von **CU(2)** bis **CU(j)**) der zweiten Vielzahl von Kommunikationseinheiten **(CU(1); CU(2); ...; (CU(j)**);
i) falls die Überprüfung durch die Steuereinheit (**215**) positiv ausfällt, Übertragen von Messdaten an das zentrale Erfassungssystem (**180**) mittels eines Kommunikationskanals (**C1'**) des sekundären Kommunikationsmodus (**G2**);
j) Erfassen der auf Gaslieferungen hinweisenden Messwerte durch das zentrale Erfassungssystem (**180**).

13. Verfahren nach Anspruch 12, wobei, falls keiner der Zähler **(110(k)**) die Messdaten von dem Gaszähler **(110(i)**) mittels des Kommunikationskanals (**C2**) empfangen noch die empfangenen Messdaten mittels des Kommunikationsnetzwerks (**185**) mittels der Kanäle (**C2'**) und (**C1'**) an das zentrale Erfassungssystem (**180**) weiterleiten kann, die Steuereinheit (**215**) die Messdaten in einer Speichereinheit des Gaszählers **(110(i)**) speichert.

14. System (**100**) zur Erfassung von Messwerten, die auf Gaslieferungen an einer Vielzahl von Standorten **(105(i)**) hinweisen, wobei das System Folgendes umfasst:
- einen an jedem der Standorte installierten Gaszähler **(110(i)**), wobei der Gaszähler ausgelegt ist, um Messwerte zu erzeugen, die auf Gaslieferungen an dem Standort, an dem er installiert ist, hinweisen;
- ein Fernerfassungssystem (**180**), das ausgelegt ist, um die Messwerte von Gaszählern zu empfangen, wobei:
jeder Gaszähler ein Gaszähler nach einem der vorhergehenden Ansprüche ist.

## Revendications

1. Compteur de gaz **(110(i)**) comprenant :
- une unité de comptage (**225**) destinée à générer des mesures indiquant des distributions de gaz, ladite unité de comptage étant reliée de manière opérationnelle à une unité de commande (**215**) pour envoyer les mesures générées à ladite unité de commande (**215**) ;
- une première pluralité d'unités de communication sans fil **(CU(1) ; CU(2) ; ... ; (CU(j)**) configurées pour communiquer avec un système d'acquisition à distance (**180**) en exploitant un premier type de liaison de communication sans fil et pour transmettre les mesures générées, préalablement reçues par ladite unité de commande (**215**), chaque unité de ladite première pluralité d'unités de communication sans fil (**CU(1) ; CU(2) ; ... ; (CU(j)**) est configurée avec une liaison de communication, dans lequel ledit premier type de liaison de communication sans fil repose sur une infrastructure réseau, dans lequel la première pluralité d'unités de communication sans fil **(CU(1) ; CU(2) ; ... ; (CU(j)**) communiquent en utilisant des technologies de communication qui sont différentes les unes des autres ;
- une deuxième pluralité d'unités de communication sans fil **(CU(1) ; CU(2) ; ... ; (CU(j)**) configurées pour communiquer avec le système d'acquisition à distance (**180**) en exploitant un deuxième type de liaison de communication sans fil autre que ledit premier type de liaison de communication sans fil et pour envoyer les mesures générées, préalablement reçues à partir de ladite unité de contrôle (**215**) ; chaque unité de ladite deuxième pluralité d'unités de communication sans fil **(CU(1) ; CU(2) ; ... ; (CU(j)**) est configurée avec une liaison de communication, dans lequel la deuxième pluralité d'unités de communication sans fil (**CU(1) ; CU(2) ; ... ; (CU(j)**) communiquent en utilisant des technologies de communication qui sont différentes les unes des autres ;
- ladite unité de commande (**215**) étant configurée pour transmettre des mesures audit système d'acquisition distant (**180**) au moyen dudit premier mode de communication ou dudit deuxième mode de communication, et pour effectuer une pluralité de tentatives de transmission de mesures en commandant en séquence lesdites première et seconde pluralités d'unités de communication sans fil **(CU(1) ; CU(2) ; ... ; (CU(j)**), et lesdites liaisons de communication de chacune desdites première et deuxième pluralités d'unités de communication sans fil **(CU(1) ; CU(2) ; ... ; (CU(j)**), dans lequel :
- ledit premier type de liaison de communication sans fil comprend un premier type de liaison de communication sans fil (**C1** ; **C2'**) entre le compteur de gaz et une station d'émission et de réception de réseau de communication (185) en communication avec le système d'acquisition à distance (**180**) ;
- ledit deuxième type de liaison de communication sans fil comprend un deuxième type de liaison de communication sans fil (**C2**) entre le compteur de gaz **(110(i)**) et un compteur choisi parmi un groupe d'autres compteurs de gaz **(110(k)**), dans lequel :
- l'unité de commande (**215**) est configurée pour envoyer lesdites mesures en réalisant la séquence d'opérations suivante :
- la commande de ladite première pluralité de communications **(CU(1) ; CU(2) ; ... ; (CU(j)**) pour envoyer lesdites mesures au système d'acquisition à distance (**180**) en exploitant ledit premier type de liaison de communication sans fil (**C1** ; **C2'**) ;
- si ledit premier type de liaison de communication sans fil (**C1** ; **C2'**) n'est pas disponible, la commande ladite deuxième pluralité de dispositifs de communication **(CU(1) ; CU(2) ; ... ; (CU(j)**) pour envoyer lesdites mesures au système d'acquisition à distance (**180**) en exploitant au moins ledit deuxième type de liaison de communication sans fil (**C2**).

2. Compteur de gaz **(110(i)**) selon la revendication 1, dans lequel :
- ledit premier type de liaison sans fil (**C1** ; **C2'**) et ledit deuxième type de liaison sans fil comprennent une liaison de communication sans fil qui exploite des bandes de fréquences sous licence et une liaison de communication sans fil qui exploite des bandes de fréquences sans licence ;
- ladite liaison de communication sans fil qui exploite des bandes de fréquences sous licence comprend au moins l'une parmi :
- une liaison de communication de type NB-IoT ;
- une liaison de communication GPRS ;
- une liaison de communication UMTS ;
- une liaison de communication GSM ;
- une liaison de communication LTE ;
- une liaison de communication 5G ;
- une liaison de communication 6G.
- ladite liaison de communication sans fil qui exploite des bandes de fréquences sans licence comprend au moins l'une parmi :
- une liaison de communication sans fil de type MBus, telle que 169 MHz ;
- une liaison de communication de type LoRa, en particulier une liaison LoRaWAN et/ou une liaison LoRaP2P ;
- une liaison de communication de type Bluetooth ;
- une liaison de communication de type BLE ;
- une liaison de communication de type 6LoWPAN ;
- une liaison de communication de type ZigBee.

3. Compteur de gaz **(110(i)**) selon les revendications 1 et 2, comprenant au moins l'une parmi ladite première pluralité d'unités de communication sans fil **(CU(1) ; CU(2) ; ... ; (CU(j)**) configurées pour envoyer les mesures au moyen de ladite liaison de communication sans fil basée sur des bandes de fréquences sous licence, et au moins l'une parmi ladite deuxième pluralité d'unités de communication sans fil **(CU(1) ; CU(2) ; ... ; (CU(j)**) configurées pour envoyer des mesures au moyen de ladite liaison de communication sans fil basée sur des bandes de fréquences sans licence.

4. Compteur de gaz **(110(i)**) selon la revendication 1 ou 2, dans lequel :
- ledit premier type de liaison sans fil est une liaison basée sur une infrastructure de réseau ;
- ledit deuxième type de liaison sans fil est une liaison de type P2P.

5. Compteur de gaz **(110(i)**) selon l'une des revendications 1 à 4, dans lequel ladite unité de commande (**215**) est configurée pour réaliser la séquence d'opérations suivante :
- commander ladite deuxième pluralité de communications **(CU(1) ; CU(2) ; ... ; (CU(j)<b)**) pour recevoir, à partir d'un autre compteur de gaz dudit groupe d'autres compteurs de gaz, des mesures générées par ledit autre compteur de gaz en exploitant ledit deuxième type de communication sans fil **(C2**) ;
- commander ladite première pluralité de communications **(CU(1) ; CU(2) ; ... ; (CU(j)**) pour envoyer lesdites mesures reçues, générées par ledit autre compteur de gaz, au système d'acquisition à distance en exploitant ledit premier type de liaison de communication sans fil (**C2'**).

6. Compteur de gaz **(110(i)**) selon l'une des revendications 1 à 5, dans lequel ledit premier type de liaison de communication sans fil (**C1** ; **C2'**) comprend une ou plusieurs liaisons de communication sans fil entre :
- une liaison de communication de type NB-IoT entre une première unité de ladite pluralité d'unités de communication **(CU(1) ; CU(2) ; ... ; (CU(j)**) du compteur de gaz et une station d'un réseau NB-IoT ;
- une liaison de communication de type LoRaWAN entre une première unité de communication **(CU(1) ; CU(2) ; ... ; (CU(j)**) du compteur de gaz et une station d'un réseau LoRaWAN.

7. Compteur de gaz **(110(i)**) selon la revendication 6, dans lequel ladite liaison de communication de type LoRaWAN est établie au moyen d'un nœud LoRaRelay, en particulier une unité de communication de l'un des autres compteurs de gaz du groupe.

8. Compteur de gaz **(110(i)**) selon la revendication 6 ou 7, dans lequel le compteur de gaz **(110(i)**) comprend deux premières unités de communication **(CU(1) ; CU(2) ; ... ; (CU(j)**) ou plus, chacune configurée pour communiquer avec le système d'acquisition à distance (**180**) en exploitant une liaison de communication sans fil différente, ladite unité de commande (**215**) étant configurée pour commander en séquence lesdites premières unités de communication **(CU(j)**) pour envoyer lesdites mesures, en exploitant des liaisons de communication sans fil respectives, au système d'acquisition à distance (**180**).

9. Compteur de gaz selon l'une des revendications précédentes, dans lequel ledit deuxième type de liaison de communication sans fil (**C2**) comprend deux liaisons de communication sans fil ou plus entre :
- une liaison de communication BLE entre une deuxième unité de communication **(CU(1) ; CU(2) ; ... ; (CU(j)**) du compteur de gaz et une deuxième unité de communication de l'un des autres compteurs de gaz du groupe ;
- une liaison de communication LoraP2P entre une deuxième unité de communication (**CU(1) ; CU(2) ; ... ; (CU(j)**) du compteur de gaz et une deuxième unité de communication de l'un des autres compteurs de gaz du groupe ;
- une liaison de communication ZigBee entre une deuxième unité de communication **(CU(1) ; CU(2) ; ... ; (CU(j)**) du compteur de gaz et une deuxième unité de communication de l'un des autres compteurs de gaz du groupe.

10. Compteur de gaz **(110(i)**) selon la revendication 10, dans lequel le compteur de gaz **(110(i)**) comprend deux deuxièmes unités de communication (**CU(1) ; CU(2) ; ... ; (CU(j)**) ou plus, chacune configurée pour communiquer avec le système d'acquisition à distance (**180**) en exploitant une liaison de communication sans fil différente, ladite unité de commande (**215**) étant configurée pour commander en séquence lesdites deuxièmes unités de communication **(CU(1) ; CU(2) ; ... ; (CU(j)**) pour envoyer lesdites mesures, en exploitant des liaisons de communication sans fil respectives, vers le système d'acquisition à distance (**180**).

11. Compteur de gaz **(110(i)**) selon l'une des revendications précédentes, dans lequel :
- l'unité de commande (**215**) est configurée pour générer une table de proximité qui répertorie ledit groupe d'autres compteurs de gaz ;
- ledit groupe d'autres compteurs de gaz comprend d'autres compteurs de gaz suffisamment proches dudit compteur de gaz pour garantir un deuxième type potentiel de liaison de communication sans fil (**C2**).

12. Procédé de transmission à un système d'acquisition central (**180**) de mesures indicatives de distributions de gaz générées par un compteur de gaz **(110(i)**) selon la revendication 1 sur une pluralité de sites **(105(i)**), le système d'acquisition central étant un système d'acquisition à distance, le procédé comprenant les étapes suivantes :
a) la sélection et l'activation, par une unité de commande (**215**), d'une première unité de communication **(CU(1)**) parmi une première pluralité d'unités de communication **(CU(1) ; CU(2) ; ... ; (CU(j)**) pour établir une connexion avec une station d'émission et de réception de réseau de communication (**185**) ; au moyen d'un canal de communication sans fil (**C1**) d'un mode de communication principal (**G1**) ;
b) si la connexion a été réussie, la transmission de données de mesure à un système d'acquisition central (**180**) au moyen d'un canal de communication (**C1'**) dudit mode de communication principal (**G1**) ;
c) l'acquisition, par ledit système d'acquisition central (**180**), desdites mesures indicatives de distributions de gaz ;
d) si la connexion n'a pas été réussie, la répétition (**2** à **j**) des étapes a) à b) pour chaque unité de communication **(CU(2)** à **CU(j)**) de ladite première pluralité d'unités de communication (**CU(1) ; CU(2) ; ... ; (CU(j)**);
e) si, au cours de la répétition (**j**), la connexion n'a pas été réussie, la sélection et l'activation par ladite unité de commande (**215**) d'une première unité de communication **(CU(1)**) parmi une deuxième pluralité d'unités de communication **(CU(1) ; CU(2) ; ... ; (CU(j)**) pour établir une connexion avec un compteur de gaz **(110(k)**) avec k=i au moyen d'un canal de communication (**C2**) d'un mode de communication secondaire (**G2**);
f) si la connexion n'a pas été réussie, la répétition (**2** à **j**) de l'étape e) pour chaque unité de communication **(CU(2)** à **CU(j)**) de ladite deuxième pluralité d'unités de communication (**CU(1) ; CU(2) ; ... ; (CU(j)**);
g) si la connexion a été réussie, la connexion de ladite unité de commande (**215**) et la vérification de la communication au moyen d'un canal de communication (**C2'**) dudit mode de communication secondaire (**G2**), entre ledit compteur de gaz **(110(k)**) et ledit réseau de communication sans fil (**185**);
h) si la vérification par ladite unité de contrôle (**215**) est négative, la réitération (**2** à **j**) de l'étape g) pour chaque unité de communication **(CU(2)** à **CU(j)**) de ladite deuxième pluralité d'unités de communication **(CU(1); CU(2) ; ... ; (CU(j)**) ;
i) si la vérification par ladite unité de contrôle (**215**) est positive, la transmission de données de mesure au système d'acquisition central (**180**) au moyen d'un canal de communication (**C1'**) dudit mode de communication secondaire (**G2**);
j) l'acquisition, par ledit système d'acquisition central (**180**), desdites mesures indicatives de distributions de gaz.

13. Procédé selon la revendication 12, dans lequel, si aucun des compteurs **(110(k)**) ne peut recevoir les données de mesure provenant dudit compteur de gaz **(110(i)**) au moyen dudit canal de communication (**C2**), ni transmettre les données de mesure reçues au système d'acquisition central (**180**) au moyen du réseau de communication (**185**) au moyen des canaux (**C2'**) et (**C1'**), ladite unité de commande (**215**) stocke les données de mesure dans une unité de mémoire dudit compteur de gaz **(110(i)**).

14. Système (**100**) pour l'acquisition de mesures indicatives de distributions de gaz sur une pluralité de sites **(105(i)**), ledit système comprenant :
- un compteur de gaz **(110(i)**) installé sur chacun desdits sites, ledit compteur de gaz étant configuré pour générer des mesures indicatives de distributions de gaz sur le site où il est installé ;
- un système d'acquisition à distance (**180**) configuré pour recevoir lesdites mesures à partir desdits compteurs de gaz, dans lequel :
chaque compteur de gaz est un compteur de gaz selon l'une des revendications précédentes.
